# EUROPEAN PATENT APPLICATION

(11) **EP 4 845 113 A1**
(43) Date of publication of application: **25.11.2026**
(21) Application number: 25751084.2
(22) Date of filing: 14.01.2025
(51) Int. Cl.: H04L 41/0246

(54) **COMPUTING RESOURCE MANAGEMENT METHOD, SYSTEM, AND DEVICE**

(30) Priority: 08.02.2024 CN 202410177145
(71) Applicant: Huawei Technologies Co., Ltd., Shenzhen, Guangdong 518129 (CN)
(72) Inventor: XIA, Haitao, Shenzhen, Guangdong 518129 (CN); YANG, Xu, Shenzhen, Guangdong 518129 (CN); YU, Chao, Shenzhen, Guangdong 518129 (CN); LI, Shitao, Shenzhen, Guangdong 518129 (CN)
(74) Representative: Pfenning, Meinig & Partner mbB
(86) International application number: PCT/CN2025/072199
(87) International publication number: WO 2025/167482

(57) **Abstract**

Embodiments of this application provide a compute resource management method, system, and apparatus. The method includes: receiving an instantiation request for a virtualized network function VNF from a network functions virtualisation orchestrator NFVO, where the instantiation request for the VNF includes a running mode of the VNF; determining addressing information of a heterogeneous compute resource pool and compute resource requirement information of the VNF that correspond to the running mode of the VNF; and sending a compute resource allocation request to an infrastructure manager IM, where the compute resource allocation request includes the addressing information of the heterogeneous compute resource pool and the compute resource requirement information of the VNF, and the compute resource allocation request is used to request to allocate, in the heterogeneous compute resource pool, a resource to the VNF based on the addressing information of the heterogeneous compute resource pool and the compute resource requirement information of the VNF. According to embodiments of this application, compute resource requirements of new telecom applications with high concurrency of compute tasks can be met.

## Description

This application claims priority to Chinese Patent Application No. 202410177145.2, filed with the China National Intellectual Property Administration on February 8, 2024 and entitled "COMPUTE RESOURCE MANAGEMENT METHOD, SYSTEM, AND APPARATUS", which is incorporated herein by reference in its entirety.

### TECHNICAL FIELD

This application relates to the field of communication technologies, and in particular, to a compute resource management method, system, and apparatus.

### BACKGROUND

Network functions virtualisation (network functions virtualisation, NFV) is an important technology for telecom network operators to perform cloud-based transformation by leveraging Internet technologies. NFV decouples software from hardware of telecom network functions, thereby implementing software-based telecom network functions on general-purpose servers. With the rapid development of new telecom applications with high concurrency of compute tasks (for example, 5G video applications, new call applications, AI applications, and computing-network convergence applications), a processing capability of a central processing unit (central processing unit, CPU) in a network functions virtualisation infrastructure (network functions virtualisation infrastructure, NFVI) and manners of allocating compute resources to a VNF in an existing NFV architecture cannot meet compute resource requirements of these new telecom applications.

Therefore, how to meet the continuously increasing compute resource requirements of telecom applications is an urgent problem to be resolved in current development of NFV technologies.

### SUMMARY

Embodiments of this application provide a compute resource management method, system, and apparatus, to meet increasing compute resource requirements of telecom applications in an NFV architecture.

According to a first aspect, an embodiment of this application provides a communication method, applied to a virtualised network function manager VNFM. The method includes:
receiving an instantiation request for a virtualized network function VNF from a network functions virtualisation orchestrator NFVO, where the instantiation request for the VNF includes a running mode of the VNF;
determining addressing information of a heterogeneous compute resource pool and compute resource requirement information of the VNF that correspond to the running mode of the VNF, where the heterogeneous compute resource pool includes at least two different types of compute resources; and
sending a compute resource allocation request to an infrastructure manager IM, where the compute resource allocation request includes the addressing information of the heterogeneous compute resource pool and the compute resource requirement information of the VNF, and the compute resource allocation request is used to request to allocate, in the heterogeneous compute resource pool, a resource to the VNF based on the addressing information of the heterogeneous compute resource pool and the compute resource requirement information of the VNF.

In the foregoing method, a telecom application has different running modes, and compute resource requirements in different running modes are also different. According to the foregoing method, in the heterogeneous compute resource pool, the compute resource is allocated to the VNF based on the running mode of the VNF, so that different types of compute resources included in the heterogeneous compute resource pool can collaboratively execute compute tasks with high concurrency as required, thereby implementing efficient utilization of compute resources, and meeting increasing compute resource requirements of telecom applications.

In an optional implementation, the addressing information of the heterogeneous compute resource pool includes identification information of the heterogeneous compute resource pool, and the compute resource requirement information of the VNF includes one or more of a VNF function framework, a collaboration relationship between compute units in the VNF function framework, a communication bandwidth requirement between compute units in the VNF function framework, and a load balancing requirement between compute units in the VNF function framework.

In still another optional implementation, the running mode of the VNF includes a VNF inference mode or a VNF training mode.

In still another optional implementation, the VNF function framework includes a VNF inference framework or a VNF training framework.

In still another optional implementation, the heterogeneous compute resource pool is a compute resource pool stored in a network functions virtualisation infrastructure NFVI, and the heterogeneous compute resource pool is a resource pool including at least two different types of compute resources among a central processing unit CPU, a graphics processing unit GPU, a digital signal processor DSP, an application-specific integrated circuit ASIC, and a field programmable gate array FPGA.

In the foregoing method, the heterogeneous compute resource in the NFVI is managed by the IM in a form of a heterogeneous compute resource pool, so that utilization of the heterogeneous compute resource can be improved.

In still another optional implementation, the instantiation request for the VNF further includes a VNF instance identifier, and the determining the addressing information of the heterogeneous compute resource pool and the compute resource requirement information of the VNF that correspond to the running mode of the VNF includes:
accessing a virtualised network function descriptor VNFD of the VNF based on the VNF instance identifier in the instantiation request for the VNF; and
determining, based on the VNFD, the addressing information of the heterogeneous compute resource pool and the compute resource requirement information of the VNF that correspond to the running mode of the VNF.

In the foregoing method, the VNFD includes the addressing information of the heterogeneous compute resource pool and the compute resource requirement information of the VNF that correspond to the running mode of the VNF.

In still another optional implementation, the determining the addressing information of the heterogeneous compute resource pool corresponding to the running mode of the VNF includes:
sending a VNF lifecycle management granting request to the NFVO, where the VNF lifecycle management granting request is used to request to determine the addressing information of the heterogeneous compute resource pool corresponding to the running mode of the VNF; and
receiving a VNF lifecycle management granting response from the NFVO, where the VNF lifecycle management granting response includes the addressing information of the heterogeneous compute resource pool.

In still another optional implementation, the instantiation request for the VNF further includes a VNF instance identifier, and the determining the compute resource requirement information of the VNF that corresponds to the running mode of the VNF includes:
accessing a virtualised network function descriptor VNFD of the VNF based on the VNF instance identifier in the instantiation request for the VNF; and
determining, based on the VNFD, the compute resource requirement information of the VNF that corresponds to the running mode of the VNF.

In still another optional implementation, the method further includes:
receiving an update request for the VNF from the NFVO, where the update request for the VNF includes an updated running mode of the VNF;
determining addressing information of an updated heterogeneous compute resource pool and updated compute resource requirement information of the VNF that correspond to the updated running mode of the VNF, where the updated heterogeneous compute resource pool includes at least two different types of compute resources; and
sending a compute resource allocation request to the IM, where the compute resource allocation request includes the addressing information of the updated heterogeneous compute resource pool and the updated compute resource requirement information of the VNF, and the compute resource allocation request is used to request to allocate, in the updated heterogeneous compute resource pool, a resource to the VNF based on the addressing information of the updated heterogeneous compute resource pool and the updated compute resource requirement information of the VNF.

According to the foregoing method, when the running mode of the VNF changes, in the updated heterogeneous compute resource pool, a resource may be reallocated to the VNF based on the updated running mode of the VNF. Therefore, in the foregoing method, heterogeneous compute resources can be flexibly scheduled and allocated to match compute resource requirements, in different running modes, of telecom applications with high concurrency of compute tasks.

According to a second aspect, an embodiment of this application provides a compute resource management method, applied to an infrastructure manager IM. The method includes:
receiving a compute resource allocation request from a virtualised network function manager VNFM, where the compute resource allocation request includes addressing information of a heterogeneous compute resource pool and compute resource requirement information of a virtualized network function VNF that correspond to a running mode of the VNF, and the heterogeneous compute resource pool includes at least two different types of compute resources; and
allocating, in the heterogeneous compute resource pool, a resource to the VNF based on the addressing information of the heterogeneous compute resource pool and the compute resource requirement information of the VNF.

In the foregoing method, a telecom application has different running modes, and compute resource requirements in different running modes are also different. According to the foregoing method, in the heterogeneous compute resource pool, the compute resource is allocated to the VNF based on the running mode of the VNF, so that different types of compute resources included in the heterogeneous compute resource pool can collaboratively execute compute tasks with high concurrency as required, thereby implementing efficient utilization of compute resources, and meeting increasing compute resource requirements of telecom applications.

In an optional implementation, after the allocating, in the heterogeneous compute resource pool, the resource to the VNF based on the addressing information of the heterogeneous compute resource pool and the compute resource requirement information of the VNF, the method further includes:
sending a compute resource allocation response to the VNFM, where the compute resource allocation response indicates that resource allocation is completed for the VNF in the heterogeneous compute resource pool.

In still another optional implementation, the addressing information of the heterogeneous compute resource pool includes identification information of the heterogeneous compute resource pool, and the compute resource requirement information of the VNF includes one or more of a VNF function framework, a collaboration relationship between compute units in the VNF function framework, a communication bandwidth requirement between compute units in the VNF function framework, and a load balancing requirement between compute units in the VNF function framework.

In still another optional implementation, the running mode of the VNF includes a VNF inference mode or a VNF training mode.

In still another optional implementation, the VNF function framework includes a VNF inference framework or a VNF training framework.

In still another optional implementation, the heterogeneous compute resource pool is a compute resource pool stored in a network functions virtualisation infrastructure NFVI, and the heterogeneous compute resource pool is a resource pool including at least two different types of compute resources among a central processing unit CPU, a graphics processing unit GPU, a digital signal processor DSP, an application-specific integrated circuit ASIC, and a field programmable gate array FPGA.

In the foregoing method, the heterogeneous compute resource in the NFVI is managed by the IM in a form of a heterogeneous compute resource pool, so that utilization of the heterogeneous compute resource can be improved.

In still another optional implementation, before the receiving the compute resource allocation request from the virtualised network function manager VNFM, the method further includes:
creating the heterogeneous compute resource pool in the network functions virtualisation infrastructure NFVI based on compute resource pool description information, where the compute resource pool description information includes a compute resource type of the heterogeneous compute resource pool and a topology relationship between nodes in the heterogeneous compute resource pool.

In the foregoing method, the IM may manage a heterogeneous compute resource stored in the NFVI, and create the heterogeneous compute resource pool.

In still another optional implementation, the topology relationship between the nodes in the heterogeneous compute resource pool is used to reflect a quantity of and a link connection relationship between the at least two different types of compute resources in the heterogeneous compute resource pool.

In still another optional implementation, after the creating the heterogeneous compute resource pool in the network functions virtualisation infrastructure NFVI based on the compute resource pool description information, the method further includes:
sending a compute resource pool onboarding notification, where the compute resource pool onboarding notification includes the addressing information of the heterogeneous compute resource pool and the topology relationship between the nodes in the heterogeneous compute resource pool, and the compute resource pool onboarding notification indicates onboarding of the heterogeneous compute resource pool.

In the foregoing method, after creating the heterogeneous compute resource pool in the NFVI, the IM may feed back a creation result of the heterogeneous compute resource pool to an upper-layer management unit, to facilitate subsequent instantiation of the VNF.

In still another optional implementation, before the creating the heterogeneous compute resource pool in the network functions virtualisation infrastructure NFVI based on the compute resource pool description information, the method further includes:
receiving a compute resource pool creation request, where the compute resource pool creation request includes the compute resource pool description information.

In the foregoing method, the IM may create a plurality of heterogeneous compute resource pools in the NFVI based on the compute resource pool creation request from the upper-layer management unit.

In still another optional implementation, after the creating the heterogeneous compute resource pool in the network functions virtualisation infrastructure NFVI based on the compute resource pool description information, the method further includes:
sending a compute resource pool creation response, where the compute resource pool creation response indicates that the heterogeneous compute resource pool is successfully created.

In the foregoing method, after creating the plurality of heterogeneous compute resource pools in the NFVI based on the compute resource pool creation request from the upper-layer management unit, the IM may further feed back a result of creating the heterogeneous compute resource pools to the upper-layer management unit, to facilitate subsequent instantiation of the VNF.

In still another optional implementation, the compute resource allocation request further includes addressing information of an updated heterogeneous compute resource pool and updated compute resource requirement information of the VNF that correspond to an updated running mode of the VNF, where the updated heterogeneous compute resource pool includes at least two different types of compute resources, and the method further includes:
allocating, in the updated heterogeneous compute resource pool, a resource to the VNF based on the addressing information of the updated heterogeneous compute resource pool and the updated compute resource requirement information of the VNF.

According to the foregoing method, when the running mode of the VNF changes, in the updated heterogeneous compute resource pool, a resource may be reallocated to the VNF based on the updated running mode of the VNF. Therefore, in the foregoing method, heterogeneous compute resources can be flexibly scheduled and allocated to match compute resource requirements, in different running modes, of telecom applications with high concurrency of compute tasks.

According to a third aspect, an embodiment of this application provides a compute resource management method, applied to a network functions virtualisation orchestrator NFVO. The method includes:
sending an instantiation request for a virtualized network function VNF to a virtualised network function manager VNFM, where the instantiation request for the VNF includes a running mode of the VNF, the instantiation request for the VNF is used to request to determine addressing information of a heterogeneous compute resource pool and compute resource requirement information of the VNF that correspond to the running mode of the VNF, and the heterogeneous compute resource pool includes at least two different types of compute resources; and
receiving an instantiation response for the VNF from the VNFM, where the instantiation response for the VNF indicates that the VNF is instantiated.

In still another optional implementation, the addressing information of the heterogeneous compute resource pool includes identification information of the heterogeneous compute resource pool, and the compute resource requirement information of the VNF includes one or more of a VNF function framework, a collaboration relationship between compute units in the VNF function framework, a communication bandwidth requirement between compute units in the VNF function framework, and a load balancing requirement between compute units in the VNF function framework.

In still another optional implementation, the running mode of the VNF includes a VNF inference mode or a VNF training mode.

In still another optional implementation, the VNF function framework includes a VNF inference framework or a VNF training framework.

In still another optional implementation, the heterogeneous compute resource pool is a compute resource pool stored in a network functions virtualisation infrastructure NFVI, and the heterogeneous compute resource pool is a resource pool including at least two different types of compute resources among a central processing unit CPU, a graphics processing unit GPU, a digital signal processor DSP, an application-specific integrated circuit ASIC, and a field programmable gate array FPGA.

In an optional implementation, before the sending the instantiation request for the virtualized network function VNF to the virtualised network function manager VNFM, the method further includes:
receiving a compute resource pool onboarding notification from an infrastructure manager IM, where the compute resource pool onboarding notification indicates onboarding of the heterogeneous compute resource pool, and the compute resource pool onboarding notification includes the addressing information of the heterogeneous compute resource pool and a topology relationship between nodes in the heterogeneous compute resource pool.

In an optional implementation, after the sending the instantiation request for the virtualized network function VNF to the virtualised network function manager VNFM, the method further includes:
receiving a VNF lifecycle management granting request from the VNFM;
determining the addressing information of the heterogeneous compute resource pool corresponding to the running mode of the VNF; and
sending a VNF lifecycle management granting response to the VNFM, where the VNF lifecycle management granting response includes the addressing information of the heterogeneous compute resource pool.

In an optional implementation, before the sending the instantiation request for the virtualized network function VNF to the virtualised network function manager VNFM, the method further includes:
sending a compute resource pool creation request to the IM, where the compute resource pool creation request includes compute resource pool description information, the compute resource pool creation request indicates to create the heterogeneous compute resource pool in the network functions virtualisation infrastructure NFVI based on the compute resource pool description information, and the compute resource pool description information includes a compute resource type of the heterogeneous compute resource pool and the topology relationship between the nodes in the heterogeneous compute resource pool.

In an optional implementation, after the sending the compute resource pool creation request to the IM, the method further includes:
receiving a compute resource pool creation response from the IM, where the compute resource pool creation response indicates that the heterogeneous compute resource pool is successfully created.

In an optional implementation, after the receiving the instantiation response for the VNF from the VNFM, the method further includes:
sending an update request for the VNF to the VNFM, where the update request for the VNF includes an updated running mode of the VNF, and the update request for the VNF is used to request to determine addressing information of an updated heterogeneous compute resource pool and updated compute resource requirement information of the VNF that correspond to the updated running mode of the VNF.

According to a fourth aspect, an embodiment of this application provides a compute resource management method. The method includes:

A virtualised network function manager VNFM receives an instantiation request for a virtualized network function VNF, where the instantiation request for the VNF includes a running mode of the VNF; determines addressing information of a heterogeneous compute resource pool and compute resource requirement information of the VNF that correspond to the running mode of the VNF, where the heterogeneous compute resource pool includes at least two different types of compute resources; and sends a compute resource allocation request to an infrastructure manager IM, where the compute resource allocation request includes the addressing information of the heterogeneous compute resource pool and the compute resource requirement information of the VNF.

The IM receives the compute resource allocation request, and allocates, in the heterogeneous compute resource pool, a resource to the VNF based on the addressing information of the heterogeneous compute resource pool and the compute resource requirement information of the VNF.

In an optional implementation, the method further includes:
A network functions virtualisation orchestrator NFVO sends the instantiation request for the VNF to the VNFM.

In an optional implementation, the VNF instantiation request further includes a VNF instance identifier, and that the VNFM determines the addressing information of the heterogeneous compute resource pool and the compute resource requirement information of the VNF that correspond to the running mode of the VNF includes:
The VNFM accesses a virtualised network function descriptor VNFD of the VNF based on the VNF instance identifier in the instantiation request for the VNF.

The VNFM determines, based on the VNFD, the addressing information of the heterogeneous compute resource pool and the compute resource requirement information of the VNF that correspond to the running mode of the VNF.

In an optional implementation, that the VNFM determines the addressing information of the heterogeneous compute resource pool corresponding to the running mode of the VNF includes:
The VNFM sends a VNF lifecycle management granting request to the NFVO, where the VNF lifecycle management granting request is used to request to determine the addressing information of the heterogeneous compute resource pool corresponding to the running mode of the VNF.

The NFVO sends a VNF lifecycle management granting response to the VNFM, where the VNF lifecycle management granting response includes the addressing information of the heterogeneous compute resource pool.

In an optional implementation, the instantiation request for the VNF further includes a VNF instance identifier, and that the VNFM determines the compute resource requirement information of the VNF that corresponds to the running mode of the VNF includes:
The VNFM accesses a virtualised network function descriptor VNFD of the VNF based on the VNF instance identifier in the instantiation request for the VNF.

The VNFM determines, based on the VNFD, the compute resource requirement information of the VNF that corresponds to the running mode of the VNF.

In an optional implementation, after the IM receives the compute resource allocation request, and allocates, in the heterogeneous compute resource pool, the resource to the VNF based on the addressing information of the heterogeneous compute resource pool and the compute resource requirement information of the VNF, the method further includes:
The IM sends a compute resource allocation response to the VNFM, where the compute resource allocation response indicates that resource allocation is completed for the VNF in the heterogeneous compute resource pool.

The VNFM sends an instantiation response for the VNF to the NFVO, where the instantiation response for the VNF indicates that the VNF is instantiated.

In an optional implementation, the method further includes:
The NFVO sends an update request for the VNF to the VNFM, where the update request for the VNF includes an updated running mode of the VNF.

The VNFM determines addressing information of an updated heterogeneous compute resource pool and updated compute resource requirement information of the VNF that correspond to the updated running mode of the VNF, where the updated heterogeneous compute resource pool includes at least two different types of compute resources.

The VNFM sends a compute resource allocation request to the IM, where the compute resource allocation request includes the addressing information of the updated heterogeneous compute resource pool and the updated compute resource requirement information of the VNF.

The IM allocates, in the updated heterogeneous compute resource pool, a resource to the VNF based on the addressing information of the updated heterogeneous compute resource pool and the updated compute resource requirement information of the VNF.

According to a fifth aspect, an embodiment of this application provides a compute resource management apparatus. The compute resource management apparatus includes a processing module and a transceiver module, and may separately perform the following operations:
the transceiver module is configured to receive an instantiation request for a virtualized network function VNF from a network functions virtualisation orchestrator NFVO, where the instantiation request for the VNF includes a running mode of the VNF;
the processing module is configured to determine addressing information of a heterogeneous compute resource pool and compute resource requirement information of the VNF that correspond to the running mode of the VNF, where the heterogeneous compute resource pool includes at least two different types of compute resources; and
the transceiver module is configured to send a compute resource allocation request to an infrastructure manager IM, where the compute resource allocation request includes the addressing information of the heterogeneous compute resource pool and the compute resource requirement information of the VNF, and the compute resource allocation request is used to request to allocate, in the heterogeneous compute resource pool, a resource to the VNF based on the addressing information of the heterogeneous compute resource pool and the compute resource requirement information of the VNF.

In an optional implementation, the addressing information of the heterogeneous compute resource pool includes identification information of the heterogeneous compute resource pool, and the compute resource requirement information of the VNF includes one or more of a VNF function framework, a collaboration relationship between compute units in the VNF function framework, a communication bandwidth requirement between compute units in the VNF function framework, and a load balancing requirement between compute units in the VNF function framework.

In still another optional implementation, the running mode of the VNF includes a VNF inference mode or a VNF training mode.

In still another optional implementation, the VNF function framework includes a VNF inference framework or a VNF training framework.

In still another optional implementation, the heterogeneous compute resource pool is a compute resource pool stored in a network functions virtualisation infrastructure NFVI, and the heterogeneous compute resource pool is a resource pool including at least two different types of compute resources among a central processing unit CPU, a graphics processing unit GPU, a digital signal processor DSP, an application-specific integrated circuit ASIC, and a field programmable gate array FPGA.

In still another optional implementation, the instantiation request for the VNF further includes a VNF instance identifier, and in terms of determining the addressing information of the heterogeneous compute resource pool and the compute resource requirement information of the VNF that correspond to the running mode of the VNF, the processing module is specifically configured to:
access a virtualised network function descriptor VNFD of the VNF based on the VNF instance identifier in the instantiation request for the VNF; and
determine, based on the VNFD, the addressing information of the heterogeneous compute resource pool and the compute resource requirement information of the VNF that correspond to the running mode of the VNF.

In still another optional implementation, in terms of determining the addressing information of the heterogeneous compute resource pool corresponding to the running mode of the VNF, the processing module is specifically configured to:
send a VNF lifecycle management granting request to the NFVO through the transceiver module, where the VNF lifecycle management granting request is used to request to determine the addressing information of the heterogeneous compute resource pool corresponding to the running mode of the VNF; and
receive a VNF lifecycle management granting response from the NFVO through the transceiver module, where the VNF lifecycle management granting response includes the addressing information of the heterogeneous compute resource pool.

In still another optional implementation, the instantiation request for the VNF further includes a VNF instance identifier, and in terms of determining the compute resource requirement information of the VNF that corresponds to the running mode of the VNF, the processing module is specifically configured to:
access a virtualised network function descriptor VNFD of the VNF based on the VNF instance identifier in the instantiation request for the VNF; and
determine, based on the VNFD, the compute resource requirement information of the VNF that corresponds to the running mode of the VNF.

In still another optional implementation,
the transceiver module is further configured to receive an update request for the VNF from the NFVO, where the update request for the VNF includes an updated running mode of the VNF;
the processing module is further configured to determine addressing information of an updated heterogeneous compute resource pool and updated compute resource requirement information of the VNF that correspond to the updated running mode of the VNF, where the updated heterogeneous compute resource pool includes at least two different types of compute resources; and
the transceiver module is further configured to send a compute resource allocation request to the infrastructure manager IM, where the compute resource allocation request includes the addressing information of the updated heterogeneous compute resource pool and the updated compute resource requirement information of the VNF, and the compute resource allocation request is used to request to allocate, in the updated heterogeneous compute resource pool, a resource to the VNF based on the addressing information of the updated heterogeneous compute resource pool and the updated compute resource requirement information of the VNF.

According to a sixth aspect, an embodiment of this application provides a compute resource management apparatus. The compute resource management apparatus includes a processing module and a transceiver module, and may separately perform the following operations:
the transceiver module is configured to receive a compute resource allocation request from a virtualised network function manager VNFM, where the compute resource allocation request includes addressing information of a heterogeneous compute resource pool and compute resource requirement information of a virtualized network function VNF that correspond to a running mode of the VNF, and the heterogeneous compute resource pool includes at least two different types of compute resources; and
the processing module is configured to allocate, in the heterogeneous compute resource pool, a resource to the VNF based on the addressing information of the heterogeneous compute resource pool and the compute resource requirement information of the VNF.

In an optional implementation, after allocating, in the heterogeneous compute resource pool, the resource to the VNF based on the addressing information of the heterogeneous compute resource pool and the compute resource requirement information of the VNF, the transceiver module is further configured to:
send a compute resource allocation response to the VNFM, where the compute resource allocation response indicates that resource allocation is completed for the VNF in the heterogeneous compute resource pool.

In still another optional implementation, the addressing information of the heterogeneous compute resource pool includes identification information of the heterogeneous compute resource pool, and the compute resource requirement information of the VNF includes one or more of a VNF function framework, a collaboration relationship between compute units in the VNF function framework, a communication bandwidth requirement between compute units in the VNF function framework, and a load balancing requirement between compute units in the VNF function framework.

In another optional implementation, the running mode of the VNF includes a VNF inference mode or a VNF training mode.

In still another optional implementation, the VNF function framework includes a VNF inference framework or a VNF training framework.

In still another optional implementation, the heterogeneous compute resource pool is a compute resource pool stored in a network functions virtualisation infrastructure NFVI, and the heterogeneous compute resource pool is a resource pool including at least two different types of compute resources among a central processing unit CPU, a graphics processing unit GPU, a digital signal processor DSP, an application-specific integrated circuit ASIC, and a field programmable gate array FPGA.

In still another optional implementation, before receiving the compute resource allocation request from the virtualised network function manager VNFM, the processing module is further configured to:
create the heterogeneous compute resource pool in the network functions virtualisation infrastructure NFVI based on compute resource pool description information, where the compute resource pool description information includes a compute resource type of the heterogeneous compute resource pool and a topology relationship between nodes in the heterogeneous compute resource pool.

In still another optional implementation, the topology relationship between the nodes in the heterogeneous compute resource pool is used to reflect a quantity of and a link connection relationship between the at least two different types of compute resources in the heterogeneous compute resource pool.

In still another optional implementation, after creating the heterogeneous compute resource pool in the network functions virtualisation infrastructure NFVI based on the compute resource pool description information, the transceiver module is further configured to:
send a compute resource pool onboarding notification, where the compute resource pool onboarding notification includes the addressing information of the heterogeneous compute resource pool and the topology relationship between the nodes in the heterogeneous compute resource pool, and the compute resource pool onboarding notification indicates onboarding of the heterogeneous compute resource pool.

In still another optional implementation, before creating the heterogeneous compute resource pool in the network functions virtualisation infrastructure NFVI based on the compute resource pool description information, the transceiver module is further configured to:
receive a compute resource pool creation request, where the compute resource pool creation request includes the compute resource pool description information.

In still another optional implementation, after creating the heterogeneous compute resource pool in the network functions virtualisation infrastructure NFVI based on the compute resource pool description information, the transceiver module is further configured to:
send a compute resource pool creation response, where the compute resource pool creation response indicates that the heterogeneous compute resource pool is successfully created.

In still another optional implementation, the compute resource allocation request further includes addressing information of an updated heterogeneous compute resource pool and updated compute resource requirement information of the VNF that correspond to an updated running mode of the VNF, where the updated heterogeneous compute resource pool includes at least two different types of compute resources, and the processing module is further configured to:
allocate, in the updated heterogeneous compute resource pool, a resource to the VNF based on the addressing information of the updated heterogeneous compute resource pool and the updated compute resource requirement information of the VNF.

According to a seventh aspect, an embodiment of this application provides a compute resource management apparatus. The compute resource management apparatus includes a transceiver module, and the transceiver module is configured to:
send an instantiation request for a virtualized network function VNF to a virtualised network function manager VNFM, where the instantiation request for the VNF includes a running mode of the VNF, the instantiation request for the VNF is used to request to determine addressing information of a heterogeneous compute resource pool and compute resource requirement information of the VNF that correspond to the running mode of the VNF, and the heterogeneous compute resource pool includes at least two different types of compute resources; and
receive an instantiation response for the VNF from the VNFM, where the instantiation response for the VNF indicates that the VNF is instantiated.

In still optional implementation, the addressing information of the heterogeneous compute resource pool includes identification information of the heterogeneous compute resource pool, and the compute resource requirement information of the VNF includes one or more of a VNF function framework, a collaboration relationship between compute units in the VNF function framework, a communication bandwidth requirement between compute units in the VNF function framework, and a load balancing requirement between compute units in the VNF function framework.

In another optional implementation, the running mode of the VNF includes a VNF inference mode or a VNF training mode.

In still another optional implementation, the VNF function framework includes a VNF inference framework or a VNF training framework.

In still another optional implementation, the heterogeneous compute resource pool is a compute resource pool stored in a network functions virtualisation infrastructure NFVI, and the heterogeneous compute resource pool is a resource pool including at least two different types of compute resources among a central processing unit CPU, a graphics processing unit GPU, a digital signal processor DSP, an application-specific integrated circuit ASIC, and a field programmable gate array FPGA.

In an optional implementation, before sending the instantiation request for the virtualized network function VNF to the virtualised network function manager VNFM, the transceiver module is further configured to:
receive a compute resource pool onboarding notification from an infrastructure manager IM, where the compute resource pool onboarding notification indicates onboarding of the heterogeneous compute resource pool, and the compute resource pool onboarding notification includes the addressing information of the heterogeneous compute resource pool and a topology relationship between nodes in the heterogeneous compute resource pool.

In an optional implementation, the compute resource management apparatus further includes a processing module, and after sending the instantiation request for the virtualized network function VNF to the virtualised network function manager VNFM,
the transceiver module is further configured to receive a VNF lifecycle management granting request from the VNFM;
the processing module is configured to determine the addressing information of the heterogeneous compute resource pool corresponding to the running mode of the VNF; and
the transceiver module is further configured to send a VNF lifecycle management granting response to the VNFM, where the VNF lifecycle management granting response includes the addressing information of the heterogeneous compute resource pool.

In an optional implementation, before sending the instantiation request for the virtualized network function VNF to the virtualised network function manager VNFM, the transceiver module is further configured to:
send a compute resource pool creation request to the IM, where the compute resource pool creation request includes compute resource pool description information, the compute resource pool creation request indicates to create the heterogeneous compute resource pool in the network functions virtualisation infrastructure NFVI based on the compute resource pool description information, and the compute resource pool description information includes a compute resource type of the heterogeneous compute resource pool and the topology relationship between the nodes in the heterogeneous compute resource pool.

In an optional implementation, after sending the compute resource pool creation request to the IM, the transceiver module is further configured to:
receive a compute resource pool creation response from the IM, where the compute resource pool creation response indicates that the heterogeneous compute resource pool is successfully created.

In an optional implementation, after receiving the instantiation response for the VNF from the VNFM, the transceiver module is further configured to:
send an update request for the VNF to the VNFM, where the update request for the VNF includes an updated running mode of the VNF, and the update request for the VNF is used to request to determine addressing information of an updated heterogeneous compute resource pool and updated compute resource requirement information of the VNF that correspond to the updated running mode of the VNF.

According to an eighth aspect, an embodiment of this application provides a compute resource management apparatus, including a logic circuit and an interface. The logic circuit is coupled to the interface; and the interface is configured to input and/or output information, where
the logic circuit is configured to perform the method according to any one of the first aspect or the possible implementations of the first aspect; or
the logic circuit is configured to perform the method according to any one of the second aspect or the possible implementations of the second aspect; or
the logic circuit is configured to perform the method according to any one of the third aspect or the possible implementations of the third aspect.

According to a ninth aspect, an embodiment of this application provides a computer-readable storage medium. The computer-readable storage medium is configured to store a computer program, where
when the computer program is executed, the method according to any one of the first aspect or the possible implementations of the first aspect can be implemented; or
when the computer program is executed, the method according to any one of the second aspect or the possible implementations of the second aspect can be implemented; or
when the computer program is executed, the method according to any one of the third aspect or the possible implementations of the third aspect can be implemented.

According to a tenth aspect, an embodiment of this application provides a compute resource management system. The communication system includes a virtualised network function manager VNFM and an infrastructure manager IM. The VNFM is the apparatus according to any one of the fifth aspect or the possible implementations of the fifth aspect, and the IM is the apparatus according to any one of the sixth aspect or the possible implementations of the sixth aspect.

In an optional implementation, the communication system further includes a network functions virtualisation orchestrator NFVO, and the NFVO is the apparatus according to any one of the seventh aspect or the possible implementations of the seventh aspect.

For beneficial effects of the method, the system, and the apparatus provided in any possible implementation of the third aspect and the tenth aspect of this application, refer to beneficial effects of the technical solutions provided in any one of the first aspect or the possible implementations of the first aspect, and any one of the second aspect or the possible implementations of the second aspect. Details are not described herein again.

### BRIEF DESCRIPTION OF DRAWINGS

The following describes accompanying drawings used in embodiments of this application.
FIG. 1 is a diagram of an architecture of an NFV system according to an embodiment of this application;
FIG. 2 is a schematic flowchart of a compute resource management method according to an embodiment of this application;
FIG. 3a is a diagram of distribution of compute resource pools in an NFVI according to an embodiment of this application;
FIG. 3b is a diagram of a topology relationship between nodes in a heterogeneous compute resource pool according to an embodiment of this application;
FIG. 4 is a schematic flowchart of another compute resource management method according to an embodiment of this application;
FIG. 5 is a schematic flowchart of still another compute resource management method according to an embodiment of this application;
FIG. 6 is a schematic flowchart of still another compute resource management method according to an embodiment of this application;
FIG. 7 is a diagram of a structure of a compute resource management apparatus according to an embodiment of this application;
FIG. 8 is a diagram of a structure of another compute resource management apparatus according to an embodiment of this application; and
FIG. 9 is a diagram of a structure of still another compute resource management apparatus according to an embodiment of this application.

### DESCRIPTION OF EMBODIMENTS

The following describes embodiments of this application with reference to accompanying drawings in embodiments of this application.

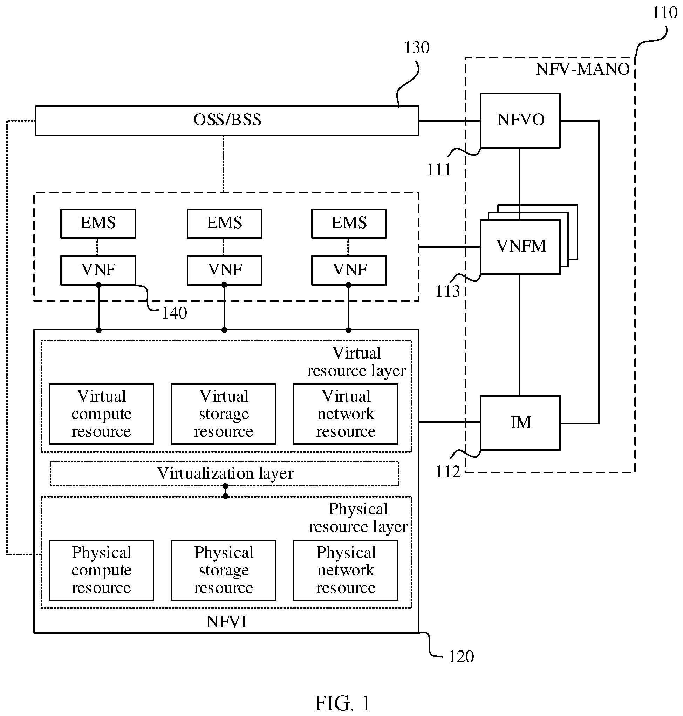

FIG. 1 is a diagram of an architecture of an NFV system according to an embodiment of this application. Specifically, the NFV system includes an NFV management and orchestration system (NFV management and orchestration system, NFV-MANO) 110, an NFV infrastructure (NFV infrastructure, NFVI) 120, a plurality of virtualized network functions (virtualized network function, VNF), a plurality of element management systems (element management system, EMS), and an operation support system/business support system (operation support system/business support system, OSS/BSS) 130. The NFV-MANO 110 may include an NFV orchestrator (NFV orchestrator, NFVO) 111, one or more VNF managers (VNF manager, VNFM), and an infrastructure manager (infrastructure manager, IM) 112.

The NFVI 120 includes a physical resource layer. The physical resource layer stores various physical resources (also referred to as hardware resources) required for running the VNF, for example, a physical compute resource, a physical storage resource, and a physical network resource. Optionally, the NFVI 120 may further include a virtualization layer and a virtual resource layer. The virtualization layer is configured to abstract a physical resource at the physical resource layer, decouple the VNF from a hardware resource layer, and provide various virtual resources for the VNF, for example, a virtual compute resource (for example, a virtual machine (virtual machine, VM)), a virtual storage resource, and a virtual network resource.

Each of the plurality of VNFs is a software implementation of a network function that can run on the NFVI 120, and is different from a physical network function (physical network function, PNF) in a conventional non-virtualized network. The plurality of EMSs are in one-to-one correspondence with the plurality of virtualized network functions VNFs, and each EMS may perform conventional fault, configuration, user, performance, and security management on the VNF.

The NFV-MANO 110 is configured to implement dynamic allocation of NFV resources (that is, various types of physical resources and/or various types of virtual resources) in the NFVI 120 to support lifecycle management of the plurality of VNFs. The NFV-MANO 110 may further implement an interaction operation with the OSS/BSS 130. Specifically, in the NFV-MANO 110, the NFVO 111 may orchestrate a service and a resource, manage a network service, and integrate a VNF into an NFV architecture, and may further verify and authorize a resource request of the NFV infrastructure. The plurality of VNFMs may be responsible for lifecycle management of a VNF instance. The IM 112 may be responsible for managing infrastructure resources (including a compute resource, a storage resource, a network resource, and the like) in the NFVI 120.

Currently, when the NFV-MANO 110 allocates a virtual compute resource to the VNF 140 running on the NFVI 120, the VNFM 113 sends compute resource requirement information of the VNF 140 to the NFVO 111 based on virtual compute resource requirement information of the VNF 140 and special physical resource requirement information (for example, acceleration) that are described in a VNFD of the VNF 140. The NFVO determines, based on the compute resource requirement information, a virtual compute resource required by the VNF 140, so as to determine target IM identification information corresponding to the to-be-allocated compute resource. Then, the NFVO 111 returns, to the VNFM 113, the target IM identification information of the to-be-allocated compute resource. The VNFM 113 sends the compute resource requirement information to the IM 112 based on the target IM identification information. The IM allocates, based on the compute resource requirement information, a resource to the VNF 140 within a resource range managed by the IM.

With emergence of new telecom applications (for example, a 5G video application, a new call application, an AI application, and a computing-network convergence application) with high concurrency of compute tasks, a requirement for a processing capability of a compute resource in the NFVI 120 to process compute tasks with high concurrency is increasingly high. Currently, a type of a compute resource in the NFVI 120 is basically a homogeneous compute resource type represented by a CPU. Because the CPU has a definite parallel bottleneck when processing compute tasks with high concurrency, and the CPU is difficult to overcome a delay jitter, it is difficult to meet compute resource requirements (for example, AI analysis and inference requirements) of new telecom applications with high concurrency of compute tasks only by using the CPU-type compute resource.

In some related technologies, heterogeneous compute resources other than a CPU are deployed in the NFVI, for example, a graphics processing unit (graphics processing unit, GPU), a digital processing unit (digital processing unit, DPU), a digital signal processor (digital signal processor, DSP), a neural-network processing unit (neural-network processing unit, NPU), an application-specific integrated circuit (application-specific integrated circuit, ASIC), and a field programmable gate array (field programmable gate array, FPGA), to form a heterogeneous compute platform. In addition, the heterogeneous compute resources on the heterogeneous compute platform are expected to meet compute resource requirements of new telecom applications through collaboration and division of labor. It is not difficult to understand that heterogeneous computing refers to a computing mode in which compute units with different types of chip instruction sets and architectures are used to form a system. Currently, a combination of a CPU and a GPU and a combination of a CPU and an FPGA are widely used heterogeneous computing modes. The combination of a CPU and a GPU is used as an example. The CPU can process a wide range of compute tasks and has high flexibility and universality, but has a limited parallel computational capability. However, the graphics processing unit GPU has a large-scale parallel processing unit and a high-bandwidth memory, and can simultaneously execute a large quantity of compute tasks. In other words, computational capabilities of the CPU and the GPU are complementary.

After the heterogeneous compute resources are introduced into the NFVI, new compute resource allocation possibilities are provided for telecom applications. However, how to specifically allocate compute resources to better meet a requirement (for example, a high concurrency requirement) of a telecom application becomes an urgent problem to be resolved.

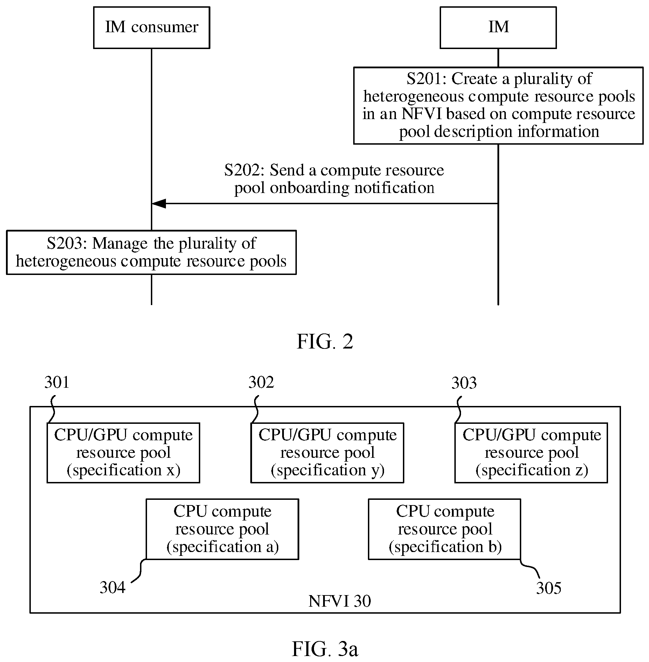

FIG. 2 is a schematic flowchart of a compute resource management method according to an embodiment of this application. The method may be implemented based on the architecture shown in FIG. 1, or may be implemented based on another architecture. The method includes but is not limited to the following steps.

**Step S201:** An IM creates a plurality of heterogeneous compute resource pools in an NFVI based on compute resource pool description information.

Each heterogeneous compute resource pool in the NFVI includes at least two different types of physical compute resources. For example, one heterogeneous compute resource pool may be a resource pool including at least two different types of physical compute resources among a CPU, a GPU, a DSP, an NPU, an ASIC, and an FPGA. In actual application, the IM that can manage a physical compute resource is also referred to as a physical infrastructure manager (physical infrastructure manager, PIM).

The compute resource description information includes a compute resource type of each of the plurality heterogeneous compute resource pools and a topology relationship between nodes (that is, compute resources) in each heterogeneous compute resource pool. Optionally, the compute resource pool description information may be determined by the IM based on a preset compute resource pool planning requirement, and the preset compute resource pool planning requirement may be set by an operator in the IM based on an actual compute resource requirement of a telecom application.

The IM determines, based on description information #1 of a heterogeneous compute resource pool in the compute resource pool description information, a plurality of compute resources that are in the NFVI and that meet a compute resource type in the description information #1, and groups the determined plurality of compute resources based on a topology relationship in the description information #1. In this way, the heterogeneous compute resource pool is created in the NFVI. It may be understood that the grouped compute resources may be all or some of the plurality of compute resources determined based on the compute resource type. It may be understood that a process of creating one heterogeneous compute resource pool in the NFVI is only used as an example for description herein, and a process of creating another heterogeneous compute resource pool in the NFVI is the same as that of the heterogeneous compute resource pool.

In an optional implementation, the plurality of heterogeneous compute resource pools created by the IM in the NFVI may be classified based on a compute resource type and a compute resource specification. For ease of understanding, the following provides an example for description. FIG. 3a is a diagram of distribution of compute resource pools in an NFVI according to an embodiment of this application. As shown in FIG. 3a, an NFVI 30 stores a CPU/GPU compute resource pool (specification x) 301, a CPU/GPU compute resource pool (specification y) 302, and a CPU/GPU compute resource pool (specification z) 303. It may be understood that the CPU/GPU compute resource pool (specification x) represents a heterogeneous compute resource pool whose compute resource type includes a CPU and a GPU and whose specification is x. The compute resource specification may be understood as a description reflecting a resource feature of a compute resource. The resource feature may be one or more of a resource size, a resource type, a resource quantity, a resource link connection relationship, vendor information, and the like.

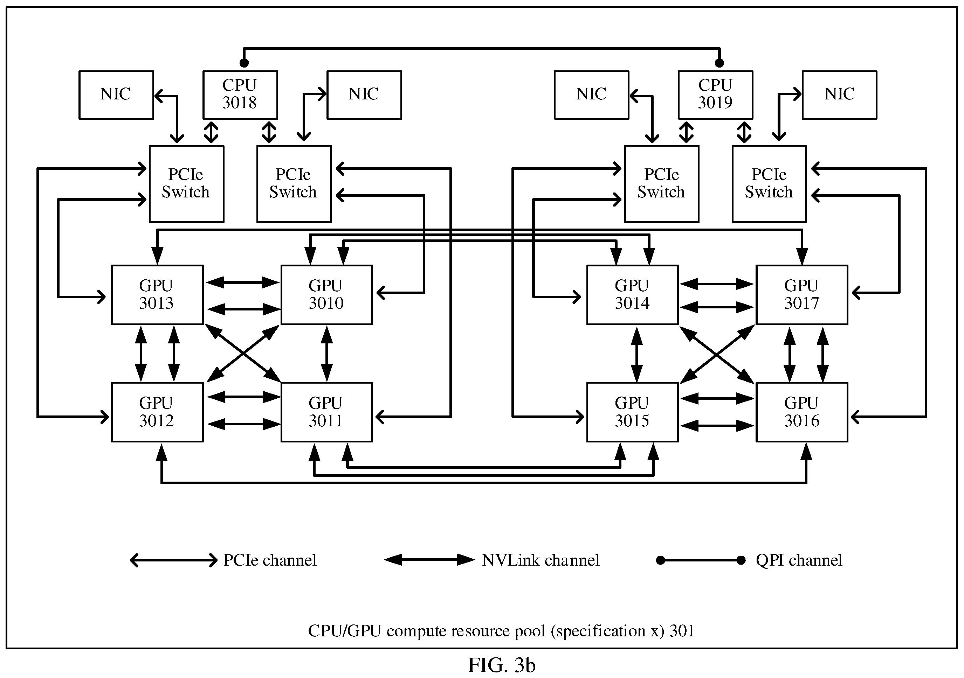

Specifically, a compute resource in each heterogeneous compute resource pool may be understood as a node in the heterogeneous compute resource pool. Each heterogeneous compute resource pool corresponds to a topology relationship between nodes, and the topology relationship is used to reflect a quantity of and a link connection relationship between compute resources in the compute resource pool. For example, a topology relationship between nodes in the CPU/GPU compute resource pool (specification x) 301 may be represented by FIG. 3b. FIG. 3b is a diagram of a topology relationship between nodes in a heterogeneous compute resource pool according to an embodiment of this application. In a heterogeneous compute resource pool, a plurality of compute resources of a same type may form a compute resource cluster of a corresponding type (for example, a CPU cluster or a GPU cluster).

As shown in FIG. 3b, compute resources of the CPU/GPU compute resource pool (specification x) 301 include eight GPUs (namely, a GPU 3010, a GPU 3011, ..., and a GPU 3017) and two CPUs (namely, a CPU 3018 and a CPU 3019). The eight GPUs may be considered as one GPU cluster, and the two CPUs can be considered as one CPU cluster.

In FIG. 3b, different communication connection manners are represented by using different arrow forms. For example, it can be learned from FIG. 3b that each GPU is configured with a maximum of six NVIDIA link (that is, NVLink) channels, and each GPU is connected to one CPU through a peripheral component interconnect express (peripheral component interconnect express, PCIe) switch. The CPU 3018 is connected to the CPU 3019 through a PCIe bus, and each CPU is connected to two external network interface cards (network interface card, NIC) through a quick path interconnect (quick path interconnect, QPI) bus. To enable full connection of the eight GPUs (that is, any two of the GPUs have a communication channel), two GPUs that are not connected through an NVLink bus may be connected through a peripheral component interconnect express (peripheral component interconnect express, PCIe) bus. For example, the GPU 3010 is connected to the GPU 3013 through two NVLinK buses, and the GPU 3010 is connected to the GPU 3014 through two NVLinK buses. The GPU 3010 is connected to the GPU 3011 through one NVLink bus, but the GPU 3010 cannot be connected to the GPU 3016 through an NVLink bus. In this case, the GPU 3010 is connected to the GPU 3016 through a PCIe bus. Generally, the NVLink bus provides higher bandwidth and has a better communication effect than the PCIe bus.

Optionally, each heterogeneous compute resource pool may further include a storage module instance and an operation and maintenance monitoring instance that correspond to a compute resource.

It may be understood that the topology relationship between the nodes in the heterogeneous compute resource pool may be combined with information such as a computational capability of a compute resource (for example, a quantity of cores, a core frequency, and a core single-clock-cycle capability of the compute resource) and communication bandwidth between compute resource combinations, so that compute resources in the heterogeneous compute resource pool collaboratively execute compute tasks with high concurrency, thereby meeting compute resource requirements of new telecom applications with high concurrency of compute tasks.

Optionally, the IM may alternatively create one or more homogeneous compute resource pools (that is, compute resource pools of a same compute resource type) in the NFVI. As shown in FIG. 3a, the NFVI 30 may further store a CPU compute resource pool (specification a) 304 and a CPU compute resource pool (specification b) 305, which may be used to meet compute resource requirements of telecom applications with low concurrency of compute tasks. A process of creating a homogeneous compute resource pool may be the same as a process of creating a heterogeneous compute resource pool.

**Step S202:** The IM sends a compute resource pool onboarding notification to an IM consumer.

Specifically, after creating the plurality of heterogeneous compute resource pools in the NFVI, the IM may determine addressing information of each heterogeneous compute resource pool. The addressing information of the heterogeneous compute resource pool may be identification information of the heterogeneous compute resource pool or a name of the heterogeneous compute resource pool, and may be understood as identity information of the heterogeneous compute resource pool. The addressing information may further indicate a compute resource type of the heterogeneous compute resource pool. For example, the name of the heterogeneous compute resource pool may be "CPU/GPU compute resource pool (specification x)" shown in FIG. 3b, and the name also indicates that compute resource types of the heterogeneous compute resource pool include a CPU and a GPU.

Then, the IM sends the compute resource pool onboarding notification to the IM consumer. The IM consumer in this embodiment of this application is a management entity that can invoke a function provided by the IM. For example, the IM consumer may be an NFVO, an OSS/BSS, or a container cluster management (container cluster management, CCM). The compute resource pool onboarding notification includes the addressing information of each heterogeneous compute resource pool in the NFVI, the compute resource type of each heterogeneous compute resource pool, and a topology relationship between nodes in each heterogeneous compute resource pool. It may be understood that the addressing information may explicitly or implicitly include information about the compute resource type. In this case, the notification may not need to include, in addition to the addressing information, information that indicates the compute resource type. For example, the "CPU/GPU compute resource pool (specification x)" may be understood as that the addressing information explicitly includes the information about the compute resource type, and that a specific value range of the addressing information corresponds to a specific compute resource type may be understood as that the addressing information implicitly includes the information about the compute resource type. Similarly, the topology relationship may also explicitly or implicitly include the compute resource type. In this case, the notification may not need to include, in addition to the topology information, information that indicates the compute resource type. It may be understood that a message name of the notification or a message name of a message carrying the notification is not limited in this application.

**Step S203:** The IM consumer manages the plurality of heterogeneous compute resource pools.

Specifically, in response to the compute resource pool onboarding notification, the IM consumer may manage the heterogeneous compute resource pool based on the addressing information of each heterogeneous compute resource pool in the NFVI, and store the topology relationship between the nodes in the heterogeneous compute resource pool. "Management" in embodiments of this application may be understood as obtaining management permission.

It can be learned that, in this embodiment of this application, the IM may group, based on a preset compute resource pool planning requirement, the physical compute resources in the NFVI into the plurality of heterogeneous compute resource pools, and feed back a creation result of the heterogeneous compute resource pools in the NFVI to an upper-layer management unit (that is, the IM consumer), to facilitate subsequent instantiation of the VNF.

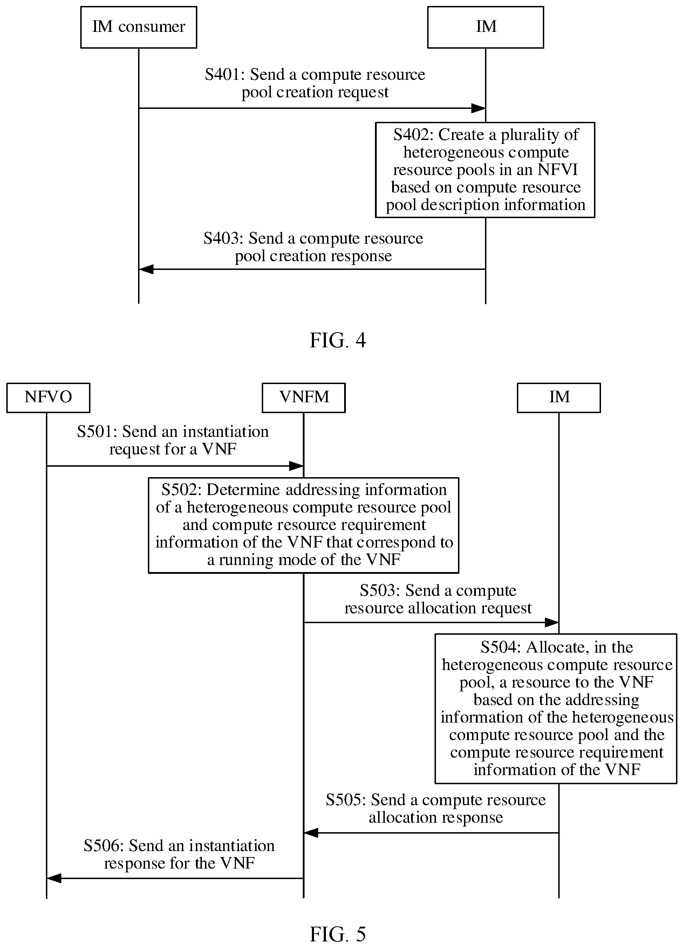

The foregoing describes a manner of creating a heterogeneous compute resource pool in the NFVI. The following describes another manner of creating a heterogeneous compute resource pool in the NFVI with reference to FIG. 4. FIG. 4 is a schematic flowchart of another compute resource management method according to an embodiment of this application. The method may be implemented based on the architecture shown in FIG. 1, or may be implemented based on another architecture. The method includes but is not limited to the following steps.

**Step S401:** An IM consumer sends a compute resource pool creation request to an IM.

Specifically, the compute resource pool creation request includes compute resource pool description information. For explanations and descriptions of the "compute resource pool description information" and the "IM consumer", respectively refer to descriptions of corresponding parts in step S201 and step S203 in the embodiment shown in FIG. 2. Details are not described herein again.

Optionally, the compute resource pool creation request may further include addressing information of a heterogeneous compute resource pool corresponding to the compute resource pool description information.

**Step S402:** The IM creates a plurality of heterogeneous compute resource pools in an NFVI based on the compute resource pool description information.

For details of S402, refer to a process of creating the plurality of heterogeneous compute resource pools in S201. A difference lies in that the heterogeneous compute resource pool created in S402 may include a virtual compute resource. Each heterogeneous compute resource pool includes at least two different types of virtual compute resources. For example, a heterogeneous compute resource pool may be a resource pool including at least two different types of virtual compute resources among a virtual CPU (which may also be referred to as a vCPU), a virtual GPU (which may also be referred to as a vGPU), a virtual DSP (which may also be referred to as a vDSP), a virtual NPU (which may also be referred to as a vNPU), a virtual ASIC (which may also be referred to as a vASIC), and a virtual FPGA (which may also be referred to as a vFPGA). In actual application, an IM that can manage a virtual compute resource may also be referred to as a virtual infrastructure manager (virtual infrastructure manager, VIM). Specifically, in response to the compute resource pool creation request, the IM virtualizes a plurality of physical compute resources in the NFVI, to form a plurality of virtual compute resources in the NFVI.

After creating the plurality of heterogeneous compute resource pools in the NFVI, the IM may store addressing information of each of the plurality of heterogeneous compute resource pools and a topology relationship between nodes in each heterogeneous compute resource pool. For explanations and descriptions of the "addressing information of the heterogeneous compute resource pool" and the "topology relationship between the nodes in the heterogeneous compute resource pool", refer to descriptions of corresponding parts in step S202 and step S201 in the embodiment shown in FIG. 2. Details are not described herein again.

**Step S403:** The IM sends a compute resource pool creation response to the IM consumer.

Specifically, after successfully creating the plurality of heterogeneous compute resource pools in the NFVI, the IM sends the compute resource pool creation response to the IM consumer. The compute resource pool creation response indicates that the plurality of heterogeneous compute resource pools are successfully created.

Optionally, when the IM fails to successfully create the plurality of heterogeneous compute resource pools in the NFVI (that is, a heterogeneous compute resource pool fails to be created), the IM may also send the compute resource pool creation response to the IM consumer. In this case, the compute resource pool creation response may indicate that the heterogeneous compute resource pools fail to be created. Specifically, the compute resource pool creation response may include an identifier of a heterogeneous compute resource pool that fails to be created, and optionally, may further include a cause of the creation failure. For example, the cause of the creation failure may be that the NFVI does not have a compute resource that matches a compute resource type in a heterogeneous compute resource pool in the compute resource pool description information.

It can be learned that, in this embodiment of this application, the IM may virtualize, based on the compute resource pool creation request from an upper-layer management unit (that is, the IM consumer), the physical compute resources in the NFVI into the virtual compute resources, then group the virtual compute resources into the plurality of heterogeneous compute resource pools, and feed back a result of creating the heterogeneous compute resource pools to the upper-layer management unit, to facilitate subsequent instantiation of the VNF.

In comparison with the embodiment shown in FIG. 2, a process of creating a heterogeneous compute resource pool in the embodiment shown in FIG. 4 is more flexible. A quantity and types of heterogeneous compute resource pools in the NFVI may be adjusted based on the compute resource pool creation request. In addition, compute resources in the heterogeneous compute resource pool in the embodiment shown in FIG. 4 are virtual compute resources formed by virtualizing physical compute resources. Compared with the embodiment shown in FIG. 2, the embodiment shown in FIG. 4 has higher utilization of physical compute resources in the process of creating the heterogeneous compute resource pool.

The following describes a VNF instantiation process with reference to FIG. 5. FIG. 5 is a schematic flowchart of still another compute resource management method according to an embodiment of this application. The method may be implemented based on the architecture shown in FIG. 1, or may be implemented based on another architecture. The method includes but is not limited to the following steps.

**Step S501:** An NFVO sends an instantiation request for a VNF to a VNFM.

Specifically, the VNF is configured to implement telecom applications (for example, a 5G video application, a new call application, an AI application, and a computing-network convergence application). For example, the VNF may be the VNF 140 shown in FIG. 1.

The instantiation request for the VNF includes a running mode of the VNF. The running mode of the VNF may be a running mode in which the VNF executes a compute task to implement an analysis or inference function. Optionally, the running mode of the VNF may be a VNF inference mode or a VNF training mode. The VNF inference mode may be further classified into a compute-intensive inference mode, a data-intensive inference mode, and the like. The VNF training mode may be further classified into a small model-based training mode, a large model-based training mode, and the like. In addition, information about a training platform vendor may be attached to the VNF training mode. It may be understood that different running modes of the VNF correspond to different compute resource requirements and different computational complexity.

It may be understood that the running mode of the VNF carried in the instantiation request is used to search for, for the VNF, a heterogeneous or homogeneous compute resource suitable for the running mode of the VNF. Other VNF description information that has a correspondence with the compute resource requirement and/or the computational complexity may replace the running mode of the VNF herein, and is used to search for, for the VNF, a heterogeneous or homogeneous compute resource suitable for the description information.

The instantiation request for the VNF may further include a VNF instance identifier, and the VNF instance identifier may be understood as information that uniquely identifies a VNF instance.

**Step S502:** The VNFM determines addressing information of a heterogeneous compute resource pool and compute resource requirement information of the VNF that correspond to the running mode of the VNF.

Specifically, the heterogeneous compute resource pool corresponding to the running mode of the VNF is a heterogeneous compute resource pool stored in a plurality of heterogeneous compute resource pools in an NFVI and used as a carrier for running the VNF. Whether a compute resource in the heterogeneous compute resource pool is a virtual compute resource or a physical compute resource is not limited in this application. A process of creating the plurality of heterogeneous compute resource pools in the NFVI is not limited in this application. The methods described in FIG. 2 and FIG. 4 are merely examples. For explanations and descriptions of the "addressing information of the heterogeneous compute resource pool", refer to descriptions of corresponding parts in step S202 in the embodiment shown in FIG. 2. Details are not described herein again. For ease of description, the "heterogeneous compute resource pool corresponding to the running mode of the VNF" is referred to as a "target heterogeneous compute resource pool" below.

The compute resource requirement information of the VNF that corresponds to the running mode of the VNF includes one or more of a VNF function framework, a collaboration relationship between compute units in the VNF function framework, and a communication requirement between compute units in the VNF function framework. The communication requirement between the compute units may be a bandwidth requirement and/or a load balancing requirement. Optionally, corresponding to the running mode of the VNF, the VNF function framework may be a VNF inference framework or a VNF training framework. The VNF inference framework may be further classified into a compute-intensive inference framework, a data-intensive inference framework, and the like. The VNF training framework may be further classified into a small model-based training framework, a large model-based training framework, and the like. For ease of description, the "compute resource requirement information of the VNF that corresponds to the running mode of the VNF" is referred to as "target compute resource requirement information" below.

In response to the instantiation request for the VNF, the VNFM accesses a virtualised network function descriptor VNFD of the VNF based on the VNF instance identifier. The VNFD includes information used to reflect a correspondence between the running mode of the VNF and the target compute resource requirement information. The VNFM may determine the target compute resource requirement information based on the VNFD. The target compute resource requirement information may be defined in the VNFD in a form of an intent.

In an optional implementation, the VNFD further includes information used to reflect a correspondence between the running mode of the VNF and the addressing information of the target heterogeneous compute resource pool. The VNFM may determine the addressing information of the target heterogeneous compute resource pool based on the VNFD.

In this implementation, the VNFD includes the addressing information of the heterogeneous compute resource pool. It may be understood that this implementation is applicable to a case in which the plurality of heterogeneous compute resource pools in the NFVI are planned and deployed in advance. In other words, in this implementation, the process of creating the plurality of heterogeneous compute resource pools in the NFVI may be the method described in FIG. 2.

When the process of creating the plurality of heterogeneous compute resource pools in the NFVI is the method described in FIG. 2, the information in the VNFD that is used to reflect the correspondence between the running mode of the VNF and the addressing information of the target heterogeneous compute resource pool may be determined based on addressing information, a compute resource type, and a topology relationship of the heterogeneous compute resource pool in the NFVI. In other words, the VNFM may determine, for one or more running modes of the VNF instance based on the obtained information about the heterogeneous compute resource pool (including the addressing information, the compute resource type information, and the topology relationship), a heterogeneous resource pool suitable for each running mode, and configure a correspondence between the running mode and the addressing information of the heterogeneous resource pool in the VNFD. The VNFM may learn of the information about the heterogeneous compute resource pool by directly or indirectly receiving a compute resource pool onboarding notification. It may be understood that, as described above, when the addressing information or the topology relationship explicitly or implicitly includes the compute resource type information, the correspondence between the running mode of the VNF in the VNFD and the addressing information of the target heterogeneous compute resource pool may be directly determined based on the addressing information and the topology relationship of the heterogeneous resource pool.

It should be noted that setting of the information in the VNFD that is used to reflect the correspondence between the running mode of the VNF and the addressing information of the target heterogeneous compute resource pool may be independently completed by an NFV system, or may be manually set.

In another optional implementation, after determining the target compute resource requirement information, the VNFM sends a VNF lifecycle management granting request to the NFVO, where the VNF lifecycle management granting request includes running mode information of the VNF. Optionally, the VNF lifecycle management granting request may further include the target compute resource requirement information. Optionally, the running mode information included in the VNF lifecycle management granting request may be the running mode of the VNF that is included in the instantiation request for the VNF in step S501, or may be a running mode determined by the VNFM by further refining the running mode of the VNF based on the target compute resource requirement information. For example, if the running mode of the VNF is an inference mode, the running mode information carried in the VNF lifecycle management granting request may be a data-intensive application inference mode. In response to the VNF lifecycle management granting request, the NFVO determines the addressing information of the target heterogeneous compute resource pool based on the running mode information, and sends a VNF lifecycle management granting response to the VNFM. Optionally, when the VNF lifecycle management granting request includes the target compute resource requirement information, the NFVO may select, when determining the addressing information of the target heterogeneous compute resource pool, a heterogeneous compute resource that meets a target compute resource requirement, and determine corresponding addressing information. The VNF lifecycle management granting response includes the addressing information of the target heterogeneous compute resource pool. The VNFM may determine the addressing information of the target heterogeneous compute resource pool based on the VNF lifecycle management granting response. It should be noted that the "VNF lifecycle management granting request" and the "VNF lifecycle management granting response" are example names of two messages in this embodiment of this application. The two messages may alternatively have other names. This is not limited herein.

In this implementation, the addressing information of the heterogeneous compute resource pool is determined by the NFVO and then sent to the VNFM. It may be understood that this implementation is applicable to a case in which the process of creating the plurality of heterogeneous compute resource pools in the NFVI is flexible. In other words, in this implementation, the process of creating the plurality of heterogeneous compute resource pools in the NFVI may be the method described in FIG. 4. In this case, an IM consumer is the NFVO.

**Step S503:** The VNFM sends a compute resource allocation request to the IM.

Specifically, the compute resource allocation request includes the addressing information of the target heterogeneous compute resource pool and the target compute resource requirement information.

**Step S504:** The IM allocates, in the heterogeneous compute resource pool, a resource to the VNF based on the addressing information of the heterogeneous compute resource pool and the compute resource requirement information of the VNF.

Specifically, in response to the compute resource allocation request, the IM determines the target heterogeneous compute resource pool in the plurality of heterogeneous compute resource pools in the NFVI based on the addressing information of the target heterogeneous compute resource pool, and allocates, in the target heterogeneous compute resource pool, the resource to the VNF based on the target compute resource requirement information.

Optionally, the target compute resource requirement information may be described in a form of an intent. The IM may parse, by using a built-in knowledge base, the target compute resource requirement described in the form of an intent, determine, in the target heterogeneous compute resource pool, a combination of compute resources required in the running mode of the VNF, and allocate the determined compute resources to the VNF.

Optionally, only one heterogeneous resource pool may be created in S201 or S402. In this case, in S504, the IM determines, based on the addressing information, to allocate, in the heterogeneous resource pool in the NFVI, the resource to the VNF.

This embodiment may further include the following steps.

**Step S505:** The IM sends a compute resource allocation response to the VNFM.

Specifically, after completing resource allocation for the VNF, the IM sends the compute resource allocation response to the VNFM. The compute resource allocation response indicates that resource allocation is completed for the VNF in the target heterogeneous compute resource pool.

**Step S506:** The VNFM sends an instantiation response for the VNF to the NFVO.

Specifically, in response to the compute resource allocation response, the VNFM sends the instantiation response for the VNF to the NFVO, where the instantiation response for the VNF indicates that the VNF is instantiated.

It can be learned that in this embodiment of this application, based on the heterogeneous compute resource pool in the NFVI, a compute resource is allocated, in the heterogeneous compute resource pool, to the VNF based on the running mode of the VNF, so that different types of compute resources included in the heterogeneous compute resource pool can collaboratively execute compute tasks with high concurrency as required, thereby implementing efficient utilization of the compute resources. Based on this embodiment of this application, a telecom application can be diverted to a corresponding heterogeneous compute resource pool as required for lifecycle management. Therefore, in this embodiment of this application, utilization of heterogeneous compute resources in the NFVI can be improved, and increasing compute resource requirements of telecom applications can be further met, so that compute resource requirements of new telecom applications with high concurrency can also be met.

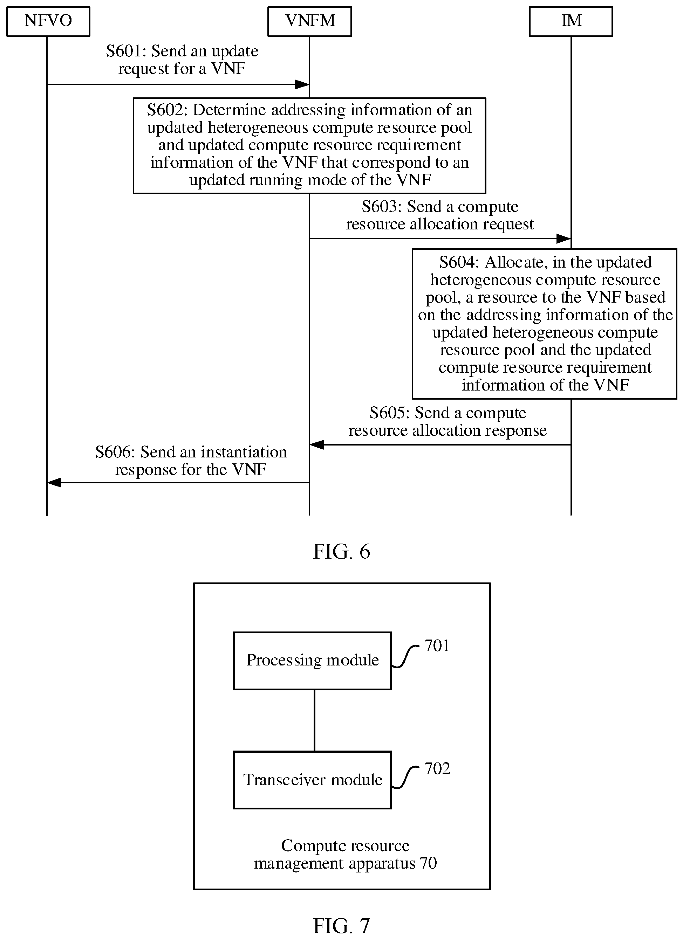

Further, when a running mode of an instantiated VNF changes, the VNF may be re-instantiated. FIG. 6 is a schematic flowchart of still another compute resource management method according to an embodiment of this application. The method may be implemented based on the architecture shown in FIG. 1, or may be implemented based on another architecture. The method includes but is not limited to the following steps.

**Step S601:** An NFVO sends an update request for a VNF to a VNFM.

Specifically, the VNF may be the VNF in the embodiment shown in FIG. 5. The update request for the VNF includes an updated running mode of the VNF and an instantiation identifier of the VNF. For example, an initial running mode of the VNF may be a VNF inference mode, and the updated running mode of the VNF may be a VNF training mode. For explanations and descriptions of the "running mode of the VNF" and the "instantiation identifier of the VNF", refer to descriptions of corresponding parts in step S501 in the embodiment shown in FIG. 5. Details are not described herein again.

**Step S602:** The VNFM determines addressing information of an updated heterogeneous compute resource pool and updated compute resource requirement information of the VNF that correspond to the updated running mode of the VNF.

It may be understood that, when the running mode of the VNF changes, the heterogeneous compute resource pool and the compute resource requirement information of the VNF that correspond to the running mode of the VNF also change accordingly. For a specific implementation of step S602, refer to explanations and descriptions of step S502 in the embodiment shown in FIG. 5. Details are not described herein again.

**Step S603:** The VNFM sends a compute resource allocation request to an IM.

For a specific implementation of step S603, refer to explanations and descriptions of step S503 in the embodiment shown in FIG. 5. Details are not described herein again.

**Step S604:** The IM allocates, in the updated heterogeneous compute resource pool, a resource to the VNF based on the addressing information of the updated heterogeneous compute resource pool and the updated compute resource requirement information of the VNF.

For a specific implementation of step S604, refer to explanations and descriptions of step S504 in the embodiment shown in FIG. 5. Details are not described herein again.

**Step S605:** The IM sends a compute resource allocation response to the VNFM.

For a specific implementation of step S605, refer to explanations and descriptions of step S505 in the embodiment shown in FIG. 5. Details are not described herein again.

**Step S606:** The VNFM sends an instantiation response for the VNF to the NFVO.

For a specific implementation of step S606, refer to explanations and descriptions of step S506 in the embodiment shown in FIG. 5. Details are not described herein again.

It can be learned that, in this embodiment of this application, when the running mode of the VNF changes, in the updated heterogeneous compute resource pool, a resource is reallocated to the VNF based on the updated running mode of the VNF. Therefore, in this embodiment of this application, heterogeneous compute resources in the NFVI can be flexibly scheduled to match compute resource requirements, in different running modes, of telecom applications with high concurrency of compute tasks.

In addition, the compute resource management method provided in this embodiment of this application may be used as a technical reference for a network resource and/or storage resource management method in an NFV architecture. For example, refer to the method described in FIG. 5. The IM may create a heterogeneous network resource pool and/or a heterogeneous storage resource pool in the NFVI in a manner of creating a heterogeneous compute resource pool, and interact with the VNFM and the NFVO to allocate, in the heterogeneous network resource pool and/or the heterogeneous storage resource pool, a resource to the VNF as required, so as to meet a storage requirement (for example, storage acceleration) and/or a network requirement (for example, network acceleration) of a new telecom application.

The following describes a compute resource management apparatus provided in embodiments of this application.

In this application, the compute resource management apparatus is divided into functional modules based on the method embodiments. For example, each functional module may be obtained through division based on each corresponding function, or two or more functions may be integrated into one processing module. The integrated module may be implemented in a form of hardware, or may be implemented in a form of a software functional module. It should be noted that, in this application, division into the modules is an example, and is merely logical function division. In actual implementation, another division manner may be used. The following describes in detail the compute resource management apparatus in embodiments of this application with reference to FIG. 7 to FIG. 9.

FIG. 7 is a diagram of a structure of a compute resource management apparatus according to an embodiment of this application. As shown in FIG. 7, a compute resource management apparatus 70 includes a processing module 701 and a transceiver module 702. The transceiver module 702 may implement a corresponding communication function, and the processing module 701 is configured to perform data processing. For example, the transceiver module 702 may also be referred to as an interface, a communication interface, or a communication module.

In some embodiments of this application, the compute resource management apparatus 70 may be configured to perform an action performed on a VNFM side in the foregoing method embodiments. For example, the compute resource management apparatus 70 may be the VNFM or a chip or a functional module that can be configured in the VNFM. The transceiver module 702 is configured to perform related receiving and sending operations on the VNFM in the foregoing method embodiments. The processing module 701 is configured to perform a processing-related operation on the VNFM in the foregoing method embodiments. The processing module 701 may perform a corresponding operation by invoking a computer program, or may perform a corresponding operation by using a corresponding hardware circuit. The transceiver module 702 may independently perform receiving and sending operations, or may perform corresponding receiving and sending operations under control of the processing module 701.

For example, the compute resource management apparatus 70 shown in FIG. 7 may be a VNFM or a component in a VNFM. The processing module 701 and the transceiver module 702 in the compute resource management apparatus 70 may separately perform the following operations:

The transceiver module 702 is configured to receive an instantiation request for a virtualized network function VNF from a network functions virtualisation orchestrator NFVO, where the instantiation request for the VNF includes a running mode of the VNF;
the processing module 701 is configured to determine addressing information of a heterogeneous compute resource pool and compute resource requirement information of the VNF that correspond to the running mode of the VNF, where the heterogeneous compute resource pool includes at least two different types of compute resources; and
the transceiver module 702 is configured to send a compute resource allocation request to an infrastructure manager IM, where the compute resource allocation request includes the addressing information of the heterogeneous compute resource pool and the compute resource requirement information of the VNF, and the compute resource allocation request is used to request to allocate, in the heterogeneous compute resource pool, a resource to the VNF based on the addressing information of the heterogeneous compute resource pool and the compute resource requirement information of the VNF.

In an optional implementation, the addressing information of the heterogeneous compute resource pool includes identification information of the heterogeneous compute resource pool, and the compute resource requirement information of the VNF includes one or more of a VNF function framework, a collaboration relationship between compute units in the VNF function framework, a communication bandwidth requirement between compute units in the VNF function framework, and a load balancing requirement between compute units in the VNF function framework.

In another optional implementation, the running mode of the VNF includes a VNF inference mode or a VNF training mode.

In still another optional implementation, the VNF function framework includes a VNF inference framework or a VNF training framework.

In still another optional implementation, the heterogeneous compute resource pool is a compute resource pool stored in a network functions virtualisation infrastructure NFVI, and the heterogeneous compute resource pool is a resource pool including at least two different types of compute resources among a central processing unit CPU, a graphics processing unit GPU, a digital signal processor DSP, an application-specific integrated circuit ASIC, and a field programmable gate array FPGA.

In still another optional implementation, the instantiation request for the VNF further includes a VNF instance identifier, and in terms of determining the addressing information of the heterogeneous compute resource pool and the compute resource requirement information of the VNF that correspond to the running mode of the VNF, the processing module 701 is specifically configured to:
access a virtualised network function descriptor VNFD of the VNF based on the VNF instance identifier in the instantiation request for the VNF; and
determine, based on the VNFD, the addressing information of the heterogeneous compute resource pool and the compute resource requirement information of the VNF that correspond to the running mode of the VNF.

In still another optional implementation, in terms of determining the addressing information of the heterogeneous compute resource pool corresponding to the running mode of the VNF, the processing module 701 is specifically configured to:
send a VNF lifecycle management granting request to the NFVO through the transceiver module 702, where the VNF lifecycle management granting request is used to request to determine the addressing information of the heterogeneous compute resource pool corresponding to the running mode of the VNF; and
receive a VNF lifecycle management granting response from the NFVO through the transceiver module 702, where the VNF lifecycle management granting response includes the addressing information of the heterogeneous compute resource pool.

In still another optional implementation, the instantiation request for the VNF further includes a VNF instance identifier, and in terms of determining the compute resource requirement information of the VNF that corresponds to the running mode of the VNF, the processing module 701 is specifically configured to:
access a virtualised network function descriptor VNFD of the VNF based on the VNF instance identifier in the instantiation request for the VNF; and
determine, based on the VNFD, the compute resource requirement information of the VNF that corresponds to the running mode of the VNF.

In still another optional implementation,
the transceiver module 702 is further configured to receive an update request for the VNF from the NFVO, where the update request for the VNF includes an updated running mode of the VNF;
the processing module 701 is further configured to determine addressing information of an updated heterogeneous compute resource pool and updated compute resource requirement information of the VNF that correspond to the updated running mode of the VNF, where the updated heterogeneous compute resource pool includes at least two different types of compute resources; and
the transceiver module 702 is further configured to send a compute resource allocation request to the infrastructure manager IM, where the compute resource allocation request includes the addressing information of the updated heterogeneous compute resource pool and the updated compute resource requirement information of the VNF, and the compute resource allocation request is used to request to allocate, in the updated heterogeneous compute resource pool, a resource to the VNF based on the addressing information of the updated heterogeneous compute resource pool and the updated compute resource requirement information of the VNF.

FIG. 7 is reused. In some other embodiments of this application, the compute resource management apparatus 70 may be configured to perform an action performed on an IM side in the foregoing method embodiments. For example, the compute resource management apparatus 70 may be the IM or a chip or a functional module that can be configured in the IM. The transceiver module 702 is configured to perform related receiving and sending operations on the IM in the foregoing method embodiments. The processing module 701 is configured to perform a processing-related operation on IM in the foregoing method embodiments. The processing module 701 may perform a corresponding operation by invoking a computer program, or may perform a corresponding operation by using a corresponding hardware circuit. The transceiver module 702 may independently perform receiving and sending operations, or may perform corresponding receiving and sending operations under control of the processing module 701.

For example, the compute resource management apparatus 70 shown in FIG. 7 may be an IM or a component in an IM. The processing module 701 and the transceiver module 702 in the compute resource management apparatus 70 may separately perform the following operations:

The transceiver module 702 is configured to receive a compute resource allocation request from a virtualised network function manager VNFM, where the compute resource allocation request includes addressing information of a heterogeneous compute resource pool and compute resource requirement information of a virtualized network function VNF that correspond to a running mode of the VNF, and the heterogeneous compute resource pool includes at least two different types of compute resources; and
the processing module 701 is configured to allocate, in the heterogeneous compute resource pool, a resource to the VNF based on the addressing information of the heterogeneous compute resource pool and the compute resource requirement information of the VNF.

In an optional implementation, after allocating, in the heterogeneous compute resource pool, the resource to the VNF based on the addressing information of the heterogeneous compute resource pool and the compute resource requirement information of the VNF, the transceiver module 702 is further configured to:
send a compute resource allocation response to the VNFM, where the compute resource allocation response indicates that resource allocation is completed for the VNF in the heterogeneous compute resource pool.

In another optional implementation, the addressing information of the heterogeneous compute resource pool includes identification information of the heterogeneous compute resource pool, and the compute resource requirement information of the VNF includes one or more of a VNF function framework, a collaboration relationship between compute units in the VNF function framework, a communication bandwidth requirement between compute units in the VNF function framework, and a load balancing requirement between compute units in the VNF function framework.

In still another optional implementation, the running mode of the VNF includes a VNF inference mode or a VNF training mode.

In still another optional implementation, the VNF function framework includes a VNF inference framework or a VNF training framework.

In still another optional implementation, the heterogeneous compute resource pool is a compute resource pool stored in a network functions virtualisation infrastructure NFVI, and the heterogeneous compute resource pool is a resource pool including at least two different types of compute resources among a central processing unit CPU, a graphics processing unit GPU, a digital signal processor DSP, an application-specific integrated circuit ASIC, and a field programmable gate array FPGA.

In still another optional implementation, before receiving the compute resource allocation request from the virtualised network function manager VNFM, the processing module 701 is further configured to:
create the heterogeneous compute resource pool in the network functions virtualisation infrastructure NFVI based on compute resource pool description information, where the compute resource pool description information includes a compute resource type of the heterogeneous compute resource pool and a topology relationship between nodes in the heterogeneous compute resource pool.

In still another optional implementation, the topology relationship between the nodes in the heterogeneous compute resource pool is used to reflect a quantity of and a link connection relationship between the at least two different types of compute resources in the heterogeneous compute resource pool.

In still another optional implementation, after creating the heterogeneous compute resource pool in the network functions virtualisation infrastructure NFVI based on the compute resource pool description information, the transceiver module 702 is further configured to:
send a compute resource pool onboarding notification, where the compute resource pool onboarding notification includes the addressing information of the heterogeneous compute resource pool and the topology relationship between the nodes in the heterogeneous compute resource pool, and the compute resource pool onboarding notification indicates onboarding of the heterogeneous compute resource pool.

In still another optional implementation, before creating the heterogeneous compute resource pool in the network functions virtualisation infrastructure NFVI based on the compute resource pool description information, the transceiver module 702 is further configured to:
receive a compute resource pool creation request, where the compute resource pool creation request includes the compute resource pool description information.

In still another optional implementation, after creating the heterogeneous compute resource pool in the network functions virtualisation infrastructure NFVI based on the compute resource pool description information, the transceiver module 702 is further configured to:
send a compute resource pool creation response, where the compute resource pool creation response indicates that the heterogeneous compute resource pool is successfully created.

In still another optional implementation, the compute resource allocation request further includes addressing information of an updated heterogeneous compute resource pool corresponding to an updated running mode of the VNF and updated compute resource requirement information of the VNF, where the updated heterogeneous compute resource pool includes at least two different types of compute resources, and the processing module 701 is further configured to:
allocate, in the updated heterogeneous compute resource pool, a resource to the VNF based on the addressing information of the updated heterogeneous compute resource pool and the updated compute resource requirement information of the VNF.

FIG. 7 is reused. In some other embodiments of this application, the compute resource management apparatus 70 may be configured to perform an action performed on an NFVO side in the foregoing method embodiments. For example, the compute resource management apparatus 70 may be the NFVO or a chip or a functional module that can be configured in the NFVO. The transceiver module 702 is configured to perform related receiving and sending operations on the NFVO in the foregoing method embodiments. The processing module 701 is configured to perform a processing-related operation on NFVO in the foregoing method embodiments. The processing module 701 may perform a corresponding operation by invoking a computer program, or may perform a corresponding operation by using a corresponding hardware circuit. The transceiver module 702 may independently perform receiving and sending operations, or may perform corresponding receiving and sending operations under control of the processing module 701.

For example, the compute resource management apparatus 70 shown in FIG. 7 may be an NFVO or a component in an NFVO. The transceiver module 702 in the compute resource management apparatus 70 is configured to:
send an instantiation request for a virtualized network function VNF to a virtualised network function manager VNFM, where the instantiation request for the VNF includes a running mode of the VNF, the instantiation request for the VNF is used to request to determine addressing information of a heterogeneous compute resource pool and compute resource requirement information of the VNF that correspond to the running mode of the VNF, and the heterogeneous compute resource pool includes at least two different types of compute resources; and
receive an instantiation response for the VNF from the VNFM, where the instantiation response for the VNF indicates that the VNF is instantiated.

In still another optional implementation, the addressing information of the heterogeneous compute resource pool includes identification information of the heterogeneous compute resource pool, and the compute resource requirement information of the VNF includes one or more of a VNF function framework, a collaboration relationship between compute units in the VNF function framework, a communication bandwidth requirement between compute units in the VNF function framework, and a load balancing requirement between compute units in the VNF function framework.

In still another optional implementation, the running mode of the VNF includes a VNF inference mode or a VNF training mode.

In still another optional implementation, the VNF function framework includes a VNF inference framework or a VNF training framework.

In still another optional implementation, the heterogeneous compute resource pool is a compute resource pool stored in a network functions virtualisation infrastructure NFVI, and the heterogeneous compute resource pool is a resource pool including at least two different types of compute resources among a central processing unit CPU, a graphics processing unit GPU, a digital signal processor DSP, an application-specific integrated circuit ASIC, and a field programmable gate array FPGA.

In an optional implementation, before sending the instantiation request for the virtualized network function VNF to the virtualised network function manager VNFM, the transceiver module 702 is further configured to:
receive a compute resource pool onboarding notification from an infrastructure manager IM, where the compute resource pool onboarding notification indicates onboarding of the heterogeneous compute resource pool, and the compute resource pool onboarding notification includes the addressing information of the heterogeneous compute resource pool and a topology relationship between nodes in the heterogeneous compute resource pool.

In an optional implementation, after the sending the instantiation request for the virtualized network function VNF to the virtualised network function manager VNFM,
the transceiver module 702 is further configured to receive a VNF lifecycle management granting request from the VNFM;
the processing module 701 is configured to determine the addressing information of the heterogeneous compute resource pool corresponding to the running mode of the VNF; and
the transceiver module 702 is further configured to send a VNF lifecycle management granting response to the VNFM, where the VNF lifecycle management granting response includes the addressing information of the heterogeneous compute resource pool.

In an optional implementation, before sending the instantiation request for the virtualized network function VNF to the virtualised network function manager VNFM, the transceiver module 702 is further configured to:
send a compute resource pool creation request to the IM, where the compute resource pool creation request includes compute resource pool description information, the compute resource pool creation request indicates to create the heterogeneous compute resource pool in the network functions virtualisation infrastructure NFVI based on the compute resource pool description information, and the compute resource pool description information includes a compute resource type of the heterogeneous compute resource pool and the topology relationship between the nodes in the heterogeneous compute resource pool.

In an optional implementation, after sending the compute resource pool creation request to the IM, the transceiver module 702 is further configured to:
receive a compute resource pool creation response from the IM, where the compute resource pool creation response indicates that the heterogeneous compute resource pool is successfully created.

In an optional implementation, after receiving the instantiation response for the VNF from the VNFM, the transceiver module 702 is further configured to:
send an update request for the VNF to the VNFM, where the update request for the VNF includes an updated running mode of the VNF, and the update request for the VNF is used to request to determine addressing information of an updated heterogeneous compute resource pool and updated compute resource requirement information of the VNF that correspond to the updated running mode of the VNF.

Specific descriptions of the transceiver module 702 and the processing module 701 shown in the foregoing embodiments are merely examples. For specific functions or steps performed by the transceiver module 702 and the processing module 701, refer to the foregoing method embodiments. Details are not described herein again.

The foregoing describes the compute resource management apparatus in embodiments of this application. The following describes possible product forms of the compute resource management apparatus. Any form of product that has a function of the compute resource management apparatus in FIG. 7 falls within the protection scope of embodiments of this application.

The following description is merely an example, and a product form of the compute resource management apparatus in embodiments of this application is not limited thereto.

In a possible implementation, in the compute resource management apparatus 70 shown in FIG. 7, the processing module 701 may be one or more processors, and the transceiver module 702 may be a transceiver; or the transceiver module 702 may be a sending module and a receiving module, the sending module may be a transmitter, and the receiving module may be a receiver. The sending module and the receiving module are integrated into one component, for example, a transceiver. In embodiments of this application, the processor and the transceiver may be coupled, or the like. A connection manner of the processor and the transceiver is not limited in embodiments of this application. In a process of performing the foregoing method, a process of sending information in the foregoing method may be a process of outputting the information by the processor. When outputting the information, the processor outputs the information to a transceiver, so that the transceiver transmits the information. After the information is output by the processor, other processing may further need to be performed on the information before the information arrives at the transceiver. Similarly, a process of receiving information in the foregoing method may be a process of receiving the input information by the processor. When the processor receives the input information, the transceiver receives the information, and inputs the information into the processor. Further, after the transceiver receives the information, other processing may need to be performed on the information before the information is input into the processor.

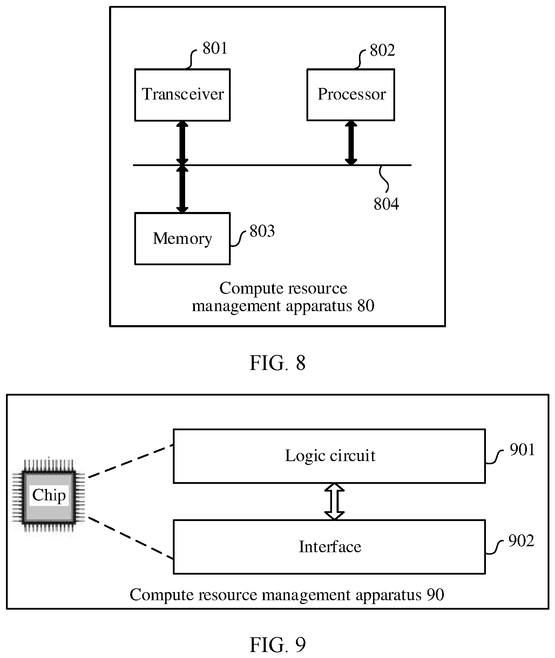

As shown in FIG. 8, the compute resource management apparatus 80 includes one or more processors 802 and a transceiver 801. For example, the transceiver 801 is configured to perform functions or steps implemented by the transceiver module 702 shown in FIG. 7, and the processor 802 is configured to perform functions or steps implemented by the processing module 701 shown in FIG. 7. For specific descriptions of the processor 802 and the transceiver 801, refer to FIG. 7 or the method embodiments shown above. Details are not described herein again.

In the foregoing embodiments, for descriptions of related steps, information, and the like, refer to the descriptions in the foregoing method embodiments. Details are not described herein again.

In implementations of the compute resource management apparatus shown in FIG. 8, the transceiver may include a receiver and a transmitter. The receiver is configured to perform a function (or an operation) of receiving, and the transmitter is configured to perform a function (or an operation) of transmitting. In addition, the transceiver is configured to communicate with another device/apparatus through a transmission medium.

Optionally, the compute resource management apparatus 80 may further include one or more memories 803, configured to store program instructions and/or data. The memory 803 is coupled to the processor 802. The coupling in embodiments of this application is an indirect coupling or a communication connection between apparatuses, units, or modules in an electrical form, a mechanical form, or another form, and is used for information exchange between the apparatuses, the units, or the modules. The processor 802 may cooperate with the memory 803. The processor 802 may execute the program instructions stored in the memory 803. Optionally, at least one of the one or more memories may be included in the processor.

A specific connection medium between the transceiver 801, the processor 802, and the memory 803 is not limited in embodiments of this application. In embodiments of this application, the memory 803, the processor 802, and the transceiver 801 are connected through a bus 804 in FIG. 8. The bus is represented by a bold line in FIG. 8. A manner of a connection between other components is merely an example for description, and is not limited thereto. The bus may be classified into an address bus, a data bus, a control bus, and the like. For ease of representation, only one bold line is used for representing the bus in FIG. 8, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed with reference to embodiments of this application may be directly performed and completed by a hardware processor, or may be performed and completed by using a combination of hardware in the processor and a software module.

In embodiments of this application, the memory may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a compact disc read-only memory (Compact Disc Read-Only Memory, CD-ROM). The memory is any storage medium that can be used to carry or store program code in a form of instructions or data structure and that can be read and/or written by a computer (for example, the compute resource management apparatus shown in this application), but is not limited thereto. The memory in embodiments of this application may alternatively be a circuit or any other apparatus that can implement a storage function, and is configured to store program instructions and/or data.

The processor 802 is mainly configured to process a communication protocol and communication data, control the entire compute resource management apparatus, execute a software program, and process data of the software program. The memory 803 is mainly configured to store the software program and the data. The transceiver 801 may include a control circuit and an antenna. The control circuit is mainly configured to convert a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

After the compute resource management apparatus is powered on, the processor 802 may read the software program in the memory 803, interpret and execute instructions of the software program, and process the data of the software program. When data needs to be sent wirelessly, the processor 802 performs baseband processing on the to-be-sent data, and then outputs a baseband signal to a radio frequency circuit. The radio frequency circuit performs radio frequency processing on the baseband signal, and then sends a radio frequency signal to the outside through the antenna in a form of an electromagnetic wave. When data is sent to the compute resource management apparatus, the radio frequency circuit receives a radio frequency signal through the antenna, converts the radio frequency signal into a baseband signal, and outputs the baseband signal to the processor 802. The processor 802 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the compute resource management apparatus.

The compute resource management apparatus shown in embodiments of this application may further have more components than those in FIG. 8, or the like. This is not limited in embodiments of this application. The methods performed by the processor and the transceiver are merely examples. For specific steps performed by the processor and the transceiver, refer to the methods described above.

In another possible implementation, in the compute resource management apparatus shown in FIG. 7, the processing module 701 may be one or more logic circuits, and the transceiver module 702 may be an input/output interface, or may be referred to as a communication interface, an interface circuit, an interface, or the like. Alternatively, the transceiver module 702 may be a sending module and a receiving module. The sending module may be an output interface, and the receiving module may be an input interface. The sending module and the receiving module are integrated into one module, for example, an input/output interface. As shown in FIG. 9, a compute resource management apparatus 90 shown in FIG. 9 includes a logic circuit 901 and an interface 902. In other words, the processing module 701 may be implemented by using the logic circuit 901, and the transceiver module 702 may be implemented by using the interface 902. The logic circuit 901 may be a chip, a processing circuit, an integrated circuit, a system on chip (system on chip, SoC) chip, or the like. The interface 902 may be a communication interface, an input/output interface, a pin, or the like. For example, FIG. 9 is an example in which the compute resource management apparatus is a chip. The chip includes the logic circuit 901 and the interface 902.

In this embodiment of this application, the logic circuit and the interface may be coupled to each other. A specific manner of connection between the logic circuit and the interface is not limited in embodiments of this application. For example, the logic circuit 901 may be configured to perform functions or steps implemented by the processing module 701 shown in FIG. 7, and the interface 902 may be configured to perform functions or steps implemented by the transceiver module 702 shown in FIG. 7. For specific descriptions of the logic circuit 901 and the interface 902, refer to FIG. 7 or the foregoing method embodiments. Details are not described herein again.

The foregoing description of the compute resource management apparatus is merely an example. For specific description of the compute resource management apparatus shown in FIG. 9, refer to the foregoing method embodiment, FIG. 7, or FIG. 8. Details are not described herein again.

The compute resource management apparatus shown in embodiments of this application may implement the methods provided in embodiments of this application in a form of hardware, or may implement the methods provided in embodiments of this application in a form of software. This is not limited in embodiments of this application.

In the foregoing embodiments, for descriptions of related steps, information, and the like, refer to the descriptions in the foregoing method embodiments. Details are not described herein again. For specific implementations of embodiments shown in FIG. 9, refer to the foregoing embodiments. Details are not described herein again.

An embodiment of this application further provides a compute resource management system. The compute resource management system includes a VNFM and an IM, and interaction between VNFM and the IM may be used to perform all or some of the steps in any one of the foregoing method embodiments.

In a possible implementation, the communication system further includes an NFVO, and interaction between the VNFM, the IM, and the NFVO may be used to perform all or some of the steps in any one of the foregoing method embodiments.

In addition, this application further provides a computer program, and the computer program is used to implement operations and/or processing performed by the compute resource management apparatuses in the method provided in this application.

This application further provides a computer-readable storage medium. The computer-readable storage medium stores computer code. When the computer code is run on a computer, the computer is enabled to perform operations and/or processing performed by compute resource management apparatuses in the method provided in this application.

This application further provides a computer program product. The computer program product includes computer code or a computer program. When the computer code or the computer program is run on a computer, operations and/or processing performed by compute resource management apparatuses in the method provided in this application are/is performed.

In several embodiments provided in this application, it should be understood that the disclosed system, apparatus, and method may be implemented in other manners. For example, the described apparatus embodiments are merely examples. For example, division into modules is merely logical functional division. In actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces, indirect couplings or communication connections between the apparatuses or units, or electrical connections, mechanical connections, or connections in other forms.

The modules described as separate parts may or may not be physically separate, and parts displayed as modules may or may not be physical modules, that is, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, or the part contributing to the conventional technologies, or all or some of the technical solutions may be implemented in a form of a software product. The computer software product is stored in a readable storage medium and includes several instructions for enabling a computer device (which may be a personal computer, a server, or a network device) to perform all or some of the steps of the methods described in embodiments of this application. The readable storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A compute resource management method, applied to a virtualised network function manager VNFM, wherein the method comprises:
receiving an instantiation request for a virtualized network function VNF from a network functions virtualisation orchestrator NFVO, wherein the instantiation request for the VNF comprises a running mode of the VNF;
determining addressing information of a heterogeneous compute resource pool and compute resource requirement information of the VNF that correspond to the running mode of the VNF, wherein the heterogeneous compute resource pool comprises at least two different types of compute resources;
sending a compute resource allocation request to an infrastructure manager IM, wherein the compute resource allocation request comprises the addressing information of the heterogeneous compute resource pool and the compute resource requirement information of the VNF, and the compute resource allocation request is used to request to allocate, in the heterogeneous compute resource pool, a resource to the VNF based on the addressing information of the heterogeneous compute resource pool and the compute resource requirement information of the VNF.

2. The method according to claim 1, wherein the addressing information of the heterogeneous compute resource pool comprises identification information of the heterogeneous compute resource pool, and the compute resource requirement information of the VNF comprises one or more of a VNF function framework, a collaboration relationship between compute units in the VNF function framework, a communication bandwidth requirement between compute units in the VNF function framework, and a load balancing requirement between compute units in the VNF function framework.

3. The method according to claim 2, wherein the running mode of the VNF comprises a VNF inference mode or a VNF training mode.

4. The method according to claim 3, wherein the VNF function framework comprises a VNF inference framework or a VNF training framework.

5. The method according to any one of claims 1 to 4, wherein the heterogeneous compute resource pool is a compute resource pool stored in a network functions virtualisation infrastructure NFVI, and the heterogeneous compute resource pool is a resource pool comprising at least two different types of compute resources among a central processing unit CPU, a graphics processing unit GPU, a digital signal processor DSP, an application-specific integrated circuit ASIC, and a field programmable gate array FPGA.

6. The method according to any one of claims 1 to 5, wherein the instantiation request for the VNF further comprises a VNF instance identifier, and the determining the addressing information of the heterogeneous compute resource pool and the compute resource requirement information of the VNF that correspond to the running mode of the VNF comprises:
accessing a virtualised network function descriptor VNFD of the VNF based on the VNF instance identifier in the instantiation request for the VNF; and
determining, based on the VNFD, the addressing information of the heterogeneous compute resource pool and the compute resource requirement information of the VNF that correspond to the running mode of the VNF.

7. The method according to any one of claims 1 to 5, wherein the determining the addressing information of the heterogeneous compute resource pool corresponding to the running mode of the VNF comprises:
sending a VNF lifecycle management granting request to the NFVO, wherein the VNF lifecycle management granting request is used to request to determine the addressing information of the heterogeneous compute resource pool corresponding to the running mode of the VNF; and
receiving a VNF lifecycle management granting response from the NFVO, wherein the VNF lifecycle management granting response comprises the addressing information of the heterogeneous compute resource pool.

8. The method according to claim 7, wherein the instantiation request for the VNF further comprises a VNF instance identifier, and the determining the compute resource requirement information of the VNF that corresponds to the running mode of the VNF comprises:
accessing a virtualised network function descriptor VNFD of the VNF based on the VNF instance identifier in the instantiation request for the VNF; and
determining, based on the VNFD, the compute resource requirement information of the VNF that corresponds to the running mode of the VNF.

9. The method according to any one of claims 1 to 8, wherein the method further comprises:
receiving an update request for the VNF from the NFVO, wherein the update request for the VNF comprises an updated running mode of the VNF;
determining addressing information of an updated heterogeneous compute resource pool and updated compute resource requirement information of the VNF that correspond to the updated running mode of the VNF, wherein the updated heterogeneous compute resource pool comprises at least two different types of compute resources; and
sending a compute resource allocation request to the IM, wherein the compute resource allocation request comprises the addressing information of the updated heterogeneous compute resource pool and the updated compute resource requirement information of the VNF, and the compute resource allocation request is used to request to allocate, in the updated heterogeneous compute resource pool, a resource to the VNF based on the addressing information of the updated heterogeneous compute resource pool and the updated compute resource requirement information of the VNF.

10. A compute resource management method, applied to an infrastructure manager IM, wherein the method comprises:
receiving a compute resource allocation request from a virtualised network function manager VNFM, wherein the compute resource allocation request comprises addressing information of a heterogeneous compute resource pool and compute resource requirement information of a virtualized network function VNF that correspond to a running mode of the VNF, and the heterogeneous compute resource pool comprises at least two different types of compute resources; and
allocating, in the heterogeneous compute resource pool, a resource to the VNF based on the addressing information of the heterogeneous compute resource pool and the compute resource requirement information of the VNF.

11. The method according to claim 10, wherein after the allocating, in the heterogeneous compute resource pool, the resource to the VNF based on the addressing information of the heterogeneous compute resource pool and the compute resource requirement information of the VNF, the method further comprises:
sending a compute resource allocation response to the VNFM, wherein the compute resource allocation response indicates that resource allocation is completed for the VNF in the heterogeneous compute resource pool.

12. The method according to claim 10 or 11, wherein the addressing information of the heterogeneous compute resource pool comprises identification information of the heterogeneous compute resource pool, and the compute resource requirement information of the VNF comprises one or more of a VNF function framework, a collaboration relationship between compute units in the VNF function framework, a communication bandwidth requirement between compute units in the VNF function framework, and a load balancing requirement between compute units in the VNF function framework.

13. The method according to claim 12, wherein the running mode of the VNF comprises a VNF inference mode or a VNF training mode.

14. The method according to claim 13, wherein the VNF function framework comprises a VNF inference framework or a VNF training framework.

15. The method according to any one of claims 10 to 14, wherein the heterogeneous compute resource pool is a compute resource pool stored in a network functions virtualisation infrastructure NFVI, and the heterogeneous compute resource pool is a resource pool comprising at least two different types of compute resources among a central processing unit CPU, a graphics processing unit GPU, a digital signal processor DSP, an application-specific integrated circuit ASIC, and a field programmable gate array FPGA.

16. The method according to any one of claims 10 to 15, wherein before the receiving the compute resource allocation request from the virtualised network function manager VNFM, the method further comprises:
creating the heterogeneous compute resource pool in the network functions virtualisation infrastructure NFVI based on compute resource pool description information, wherein the compute resource pool description information comprises a compute resource type of the heterogeneous compute resource pool and a topology relationship between nodes in the heterogeneous compute resource pool.

17. The method according to claim 16, wherein the topology relationship between the nodes in the heterogeneous compute resource pool is used to reflect a quantity of and a link connection relationship between the at least two different types of compute resources in the heterogeneous compute resource pool.

18. The method according to claim 16 or 17, wherein after the creating the heterogeneous compute resource pool in the network functions virtualisation infrastructure NFVI based on the compute resource pool description information, the method further comprises:
sending a compute resource pool onboarding notification, wherein the compute resource pool onboarding notification comprises the addressing information of the heterogeneous compute resource pool and the topology relationship between the nodes in the heterogeneous compute resource pool, and the compute resource pool onboarding notification indicates onboarding of the heterogeneous compute resource pool.

19. The method according to claim 16 or 17, wherein before the creating the heterogeneous compute resource pool in the network functions virtualisation infrastructure NFVI based on the compute resource pool description information, the method further comprises:
receiving a compute resource pool creation request, wherein the compute resource pool creation request comprises the compute resource pool description information.

20. The method according to claim 19, wherein after the creating the heterogeneous compute resource pool in the network functions virtualisation infrastructure NFVI based on the compute resource pool description information, the method further comprises:
sending a compute resource pool creation response, wherein the compute resource pool creation response indicates that the heterogeneous compute resource pool is successfully created.

21. The method according to any one of claims 10 to 20, wherein the compute resource allocation request further comprises addressing information of an updated heterogeneous compute resource pool and updated compute resource requirement information of the VNF that correspond to an updated running mode of the VNF, the updated heterogeneous compute resource pool comprises at least two different types of compute resources, and the method further comprises:
allocating, in the updated heterogeneous compute resource pool, a resource to the VNF based on the addressing information of the updated heterogeneous compute resource pool and the updated compute resource requirement information of the VNF.

22. A compute resource management method, wherein the method comprises:
receiving, by a virtualised network function manager VNFM, an instantiation request for a virtualized network function VNF, wherein the instantiation request for the VNF comprises a running mode of the VNF;
determining, by the VNFM, addressing information of a heterogeneous compute resource pool and compute resource requirement information of the VNF that correspond to the running mode of the VNF, wherein the heterogeneous compute resource pool comprises at least two different types of compute resources;
sending, by the VNFM, a compute resource allocation request to an infrastructure manager IM, wherein the compute resource allocation request comprises the addressing information of the heterogeneous compute resource pool and the compute resource requirement information of the VNF;
receiving, by the IM, the compute resource allocation request; and
allocating, by the IM in the heterogeneous compute resource pool, a resource to the VNF based on the addressing information of the heterogeneous compute resource pool and the compute resource requirement information of the VNF.

23. The method according to claim 22, wherein the method further comprises:
sending, by a network functions virtualisation orchestrator NFVO, the instantiation request for the VNF to the VNFM.

24. The method according to claim 23, wherein the instantiation request for the VNF further comprises a VNF instance identifier, and the determining, by the VNFM, the addressing information of the heterogeneous compute resource pool and the compute resource requirement information of the VNF that correspond to the running mode of the VNF comprises:
accessing, by the VNFM, a virtualised network function descriptor VNFD of the VNF based on the VNF instance identifier in the instantiation request for the VNF; and
determining, by the VNFM based on the VNFD, the addressing information of the heterogeneous compute resource pool and the compute resource requirement information of the VNF that correspond to the running mode of the VNF.

25. The method according to claim 23, wherein the determining, by the VNFM, the addressing information of the heterogeneous compute resource pool corresponding to the running mode of the VNF comprises:
sending, by the VNFM, a VNF lifecycle management granting request to the NFVO, wherein the VNF lifecycle management granting request is used to request to determine the addressing information of the heterogeneous compute resource pool corresponding to the running mode of the VNF; and
sending, by the NFVO, a VNF lifecycle management granting response to the VNFM, wherein the VNF lifecycle management granting response comprises the addressing information of the heterogeneous compute resource pool.

26. The method according to claim 25, wherein the instantiation request for the VNF further comprises a VNF instance identifier, and the determining, by the VNFM, the compute resource requirement information of the VNF that corresponds to the running mode of the VNF comprises:
accessing, by the VNFM, a virtualised network function descriptor VNFD of the VNF based on the VNF instance identifier in the instantiation request for the VNF; and
determining, by the VNFM based on the VNFD, the compute resource requirement information of the VNF that corresponds to the running mode of the VNF.

27. The method according to any one of claims 23 to 26, wherein after the receiving, by the IM, the compute resource allocation request, and allocating, in the heterogeneous compute resource pool, the resource to the VNF based on the addressing information of the heterogeneous compute resource pool and the compute resource requirement information of the VNF, the method further comprises:
sending, by the IM, a compute resource allocation response to the VNFM, wherein the compute resource allocation response indicates that resource allocation is completed for the VNF in the heterogeneous compute resource pool; and
sending, by the VNFM, an instantiation response for the VNF to the NFVO, wherein the instantiation response for the VNF indicates that the VNF is instantiated.

28. The method according to claim 27, wherein the method further comprises:
sending, by the NFVO, an update request for the VNF to the VNFM, wherein the update request for the VNF comprises an updated running mode of the VNF;
determining, by the VNFM, addressing information of an updated heterogeneous compute resource pool and updated compute resource requirement information of the VNF that correspond to the updated running mode of the VNF, wherein the updated heterogeneous compute resource pool comprises at least two different types of compute resources;
sending, by the VNFM, a compute resource allocation request to the IM, wherein the compute resource allocation request comprises the addressing information of the updated heterogeneous compute resource pool and the updated compute resource requirement information of the VNF; and
allocating, by the IM in the updated heterogeneous compute resource pool, a resource to the VNF based on the addressing information of the updated heterogeneous compute resource pool and the updated compute resource requirement information of the VNF.

29. A compute resource management apparatus, wherein the apparatus comprises a module configured to perform the method according to any one of claims 1 to 9; or the compute resource management apparatus comprises a processor, and the processor is configured to perform the method according to any one of claims 1 to 9.

30. A compute resource management apparatus, wherein the apparatus comprises a module configured to perform the method according to any one of claims 10 to 21; or the apparatus comprises a processor, and the processor is configured to perform the method according to any one of claims 10 to 21.

31. A compute resource management system, wherein the system comprises a virtualised network function manager VNFM and an infrastructure manager IM, the VNFM is the apparatus according to claim 29, and the IM is the apparatus according to claim 30.

32. A compute resource management apparatus, comprising a logic circuit and an interface, wherein the logic circuit is coupled to the interface; and
the interface is configured to input and/or output information, and the logic circuit is configured to perform the method according to any one of claims 1 to 21.

33. A computer-readable storage medium, wherein the computer-readable storage medium is configured to store a computer program; and when the computer program is executed, the method according to any one of claims 1 to 21 is performed.
